(19) Europäisches Patentamt
European Patent Office
Office européen des brevets

(11) **EP 4 105 291 A1**

(12) **EUROPEAN PATENT APPLICATION**
published in accordance with Art. 153(4) EPC

(43) Date of publication:
**21.12.2022 Bulletin 2022/51**

(21) Application number: **21753867.7**

(22) Date of filing: **08.02.2021**

(51) International Patent Classification (IPC):
*C09J 11/04* (2006.01)   *C09J 107/00* (2006.01)
*C09K 3/00* (2006.01)   *C09J 7/22* (2018.01)
*C09J 7/24* (2018.01)   *C09J 7/25* (2018.01)
*C09J 7/38* (2018.01)

(52) Cooperative Patent Classification (CPC):
**C09J 7/22; C09J 7/24; C09J 7/25; C09J 7/38;
C09J 11/04; C09J 107/00; C09J 201/00; C09K 3/00**

(86) International application number:
**PCT/JP2021/004568**

(87) International publication number:
**WO 2021/161952 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.02.2020 JP 2020020903**

(71) Applicant: **Nitto Denko Corporation
Ibaraki-shi, Osaka 567-8680 (JP)**

(72) Inventors:
• **HORIGUCHI, Hakaru**
  **Ibaraki-shi, Osaka 567-8680 (JP)**
• **YONEZAKI, Kosuke**
  **Ibaraki-shi, Osaka 567-8680 (JP)**
• **SHIMAZAKI, Yuta**
  **Ibaraki-shi, Osaka 567-8680 (JP)**
• **MISHIMA, Kunimasa**
  **Ibaraki-shi, Osaka 567-8680 (JP)**

(74) Representative: **Grünecker Patent- und
Rechtsanwälte
PartG mbB
Leopoldstraße 4
80802 München (DE)**

(54) **ADHESIVE SHEET**

(57)   Provided is a pressure-sensitive adhesive sheet that has a high-speed peel strength applicable for machining with laser beams, suppresses peeling noise when pulled and peeled off from the backside of a substrate at a high speed, and is prevented from slipping too much even when the pressure-sensitive adhesive sheets are stacked while being applied to a metal plate or the like. A pressure-sensitive adhesive sheet provided by the present invention includes a resin film as a substrate and a pressure-sensitive adhesive layer provided on a first face of the substrate. In the pressure-sensitive adhesive sheet, a second face of the substrate is a release face, and the second face has a slip resistance value of 3.5 N or more. The pressure-sensitive adhesive sheet has a high-speed peel strength of 4.5 N/20 mm or higher, which is measured under conditions of a tensile speed of 30 m/min after 30 minutes of application to a stainless steel plate, and it has a difference between the maximum and minimum values of a self-backside adhesive strength of 1.5 N/20mm or lower, which is measured under a condition of a tensile speed of 30 m/min.

FIG.3

**Description**

[Technical Field]

The present invention relates to a pressure-sensitive adhesive (PSA) sheet. The present application claims priority based on Japanese Patent Application Publication No. 2020-20903 filed on February 10, 2020, and the entire content thereof is incorporated herein by reference.

[Background Art]

In general, adhesives (also called pressure-sensitive adhesives (PSAs); the same applies hereafter) exhibit a state of soft solid (viscoelastic body) in the temperature range around room temperature and have the property of easily adhering to an adherend under pressure. By taking advantage of such a property, PSAs are widely used in various fields, typically in the form of a PSA sheet with a PSA layer on a substrate, for the purpose of joining, fixing, surface protection, masking, marking, and the like. For example, technical literature on PSA sheets that can be used for surface protection during laser machining includes Patent Documents 1 and 2.

[Citation List]

[Patent Literature]

 [Patent Document 1] Japanese Patent Application Publication No. 2019-59879
 [Patent Document 2] WO 2018/159591

[Summary of Invention]

[Technical Problem]

Recently, there is a growing interest in machining techniques using laser beams. Machining techniques using laser beams are widely used for cutting, drilling, and the like of various materials. Typical examples of lasers used in such machining include a carbon dioxide laser having a center wavelength of about 9.3 $\mu$m to 10.6 $\mu$m and a short-wavelength laser having a center wavelength of about 0.9 $\mu$m to 1.1 $\mu$m. For instance, in an embodiment of such laser machining, a PSA sheet as an auxiliary material is adhered to an object to be processed as an adherend (workpiece, hereinafter referred to as a "workpiece") and irradiated with a laser beam to laser-process the workpiece along with the PSA sheet. The PSA sheet usable in such an embodiment preferably has a high-speed peel strength suitable for suppressing floating and peeling caused by assist gas supplied during laser machining.

Among them, by using a short-wavelength laser beam having a center wavelength of about 0.9 $\mu$m to 1.1 $\mu$m, the energy required for machining can be efficiently applied to the workpiece. This feature can be advantageous from the viewpoint of speeding up of machining and micro-machinability. Meanwhile, in machining with a short-wavelength laser, assist gas pressure tends to become higher in speeding up of the machining. Thus, the PSA sheet that is assumed to be used for machining with a short-wavelength laser is particularly desired to have a certain degree or more of high-speed peel strength from the viewpoint of suppressing the occurrence of a phenomenon in which the assist gas with a high pressure enters between the PSA sheet and an object to be processed to make this sheet float from the object.

Some PSA sheets before use (before adhering to an adherend) may be provided in the form of a roll body or stacked body in which a second face (backside) of the substrate serves as a release face subjected to a peeling process such as application of a release treatment agent and this backside contacts a surface of a PSA layer, from the viewpoint of saving resources or reducing wastes generated in working places, for example. The application of such a PSA sheet onto the object to be processed involves an operation of pulling and peeling off the PSA sheet from the above-described backside to expose the surface of the PSA layer (adhesive face). In order to improve the efficiency of processing involving the laser machining, it is desirable to speed up the operation of applying the PSA sheet onto the object to be processed prior to the above-described laser machining. Further, it is also preferable to speed up the operation of pulling and peeling off the PSA sheet from the backside.

However, it is found that the PSA sheet configured to exhibit high-speed peel strength sufficient to withstand assist gas pressure and the like during laser machining tends to generate loud peeling noise when speeding up the operation of pulling and peeling off the PSA sheet from the backside. In order to improve a work environment in terms of noise, it is desirable to suppress the above-described peeling noise. However, assume that a release treatment is performed on the backside of the substrate using a release treatment agent with a higher slipping effect in order to suppress peeling noise by enhancing the releasability from the backside of the PSA sheet. In this case, inconveniences may occur, for example, when a plurality of PSA sheets is stacked flat while being applied to the object to be processed (for example, a metal plate), the PSA sheet may easily slide sideways, causing the stacked sheets to collapse.

In view of such circumstances, the present invention has an object to provide a PSA sheet that has a high-speed peel strength applicable for machining with laser beams, suppresses peeling noise when pulled and peeled off from the backside of a substrate at a high speed, and is prevented from slipping too much even when the PSA sheets are stacked while being applied to a metal plate or the like.

[Solution to Problem]

As described in this specification, a PSA sheet is provided which includes a resin film as a substrate and a PSA layer provided on a first face of the substrate. In the PSA sheet, a second face of the substrate is a release face, and the second face has a slip resistance value of 3.5 N or more. In the PSA sheet, a high-speed peel strength, which is measured under conditions of a tensile speed of 30 m/min after 30 minutes of application to a stainless steel plate (hereinafter also simply referred to as a "high-speed peel strength"), is 4.5 N/20mm or higher, and a difference between the maximum and minimum values (hereinafter also referred to as a "fluctuation range") of a self-backside adhesive strength, which is measured under a condition of a tensile speed of 30 m/min (hereinafter also simply referred to as a "self-backside adhesive strength"), is 1.5 N/20mm or lower.

The PSA sheet with such a configuration can be suitably maintained in a state of being applied to an adherend without causing floating or peeling of the sheet even when it is attacked by, for example, assist gas pressure during machining with a laser beam. Furthermore, peeling noise when pulling and peeling the PSA sheet from its backside at a high speed during use can be reduced, and when adherends with the PSA sheets applied are stacked, the adherend can be prevented from slipping horizontally.

In the PSA sheet according to some preferred embodiments, the second face of the substrate is formed of a resin composition containing a release agent. The PSA sheet disclosed herein can be suitably implemented in the form of a configuration with such a substrate. As the above release agent, for example, a silicone-based release agent can be preferably used. A suitable example of the silicone-based release agent is silylated polyolefin.

In some embodiments, a natural rubber-based PSA can be preferably employed as a PSA forming the above PSA layer. The PSA sheet including such a PSA layer can be suitably used for applications required to have a high level of high-speed peel strength.

In some preferred embodiments, the PSA sheet disclosed herein has an average value of the self-backside adhesive strengths of 1 N/20mm or higher and 5 N/20mm or lower. Such a PSA sheet is preferable because it also achieves an appropriate slip resistance value as well, and can enhance the workability when it is peeled off from the backside.

In some embodiments of the PSA sheet disclosed herein, a low-speed peel strength, which is measured under conditions of a tensile speed of 0.3 m/min after 30 minutes of application of the PSA sheet to a stainless steel plate (hereinafter also simply referred to as a "low-speed peel strength"), is preferably 5 N/20mm or lower. Such a PSA sheet can be easily peeled off from the adherend after use, and any adhesive residue after peeling tends to be better controlled.

In some embodiments, the substrate is a polyolefin resin film or polyester resin film. The PSA sheet including such a substrate is preferable because, when cutting the PSA sheet with a laser beam, its cut width is easy to control, and a cut end face of the PSA sheet is easily formed with high precision.

The PSA sheet disclosed herein can contain a laser beam absorbent as necessary. By containing the laser beam absorbent in the PSA sheet, the laser beam absorbance can be increased, thereby improving the laser machinability of an adherend with the PSA sheet applied. The laser beam absorbent is preferably contained in at least the substrate from the viewpoint of easily achieving both a good laser beam absorbing property and a desired adhesive property.

In some embodiments, the laser beam absorbent can preferably use, for example, at least one selected from the group consisting of carbon black, titanium oxides, titanium black, iron-based oxides, and manganese-based oxides. Carbon black and iron-based oxides are exemplified as preferable laser beam absorbents from the viewpoint of securing availability of the material.

The PSA sheet disclosed herein is less likely to float or peel off from the adherend due to an assist gas pressure even when used by being cut using a laser beam together with an object (adherend) to be processed while applied to the object. Therefore, as another aspect of the PSA sheet, a PSA sheet for laser cutting is provided which is made of any one of the PSA sheets disclosed herein and is used by being cut with a laser beam (for example, a laser beam from a carbon dioxide gas laser, a short-wavelength laser, or the like). In addition, as a further aspect of the PSA sheet, a PSA sheet for laser cutting is provided which is used by being cut with a short-wavelength laser beam (hereinafter also referred to as a "prescribed laser beam") having a center wavelength ranging from 900 nm to 1100 nm.

As described in this specification, a roll body is provided which includes the above PSA sheet in the form of being wound such that the PSA layer contacts the second face (backside) of the substrate. According to such a roll body, backside peeling noise generated when rolling out the PSA sheet from the roll body is suppressed, thereby making it possible to improve the work environment for workers.

[Brief Description of Drawings]

Fig. 1 is a cross-sectional view schematically showing a PSA sheet according to an embodiment.
Fig. 2 is a cross-sectional view schematically showing a roll body in which the PSA sheets according to the embodiment are wound.
Fig. 3 is a cross-sectional view schematically showing a PSA sheet according to another embodiment.

[Embodiments of Description]

Preferred embodiments of the present invention will be described below. Matters necessary to practice this invention other than those specifically referred to in this description may be understood to a person of ordinary skills in the art based on the disclosure of embodiments of the invention in this description and the common technical knowledge at the time of filing. The present invention can be practiced based on the contents disclosed in this description and the common technical knowledge in the subject field. In the description below, members and sites providing the same effect may be indicated by a common reference numeral, and redundant descriptions may be omitted or simplified. The embodiments are schematically illustrated in the drawings for clear illustration of the present invention and the drawings do not necessarily represent the sizes or scales of products accurately that are actually provided.

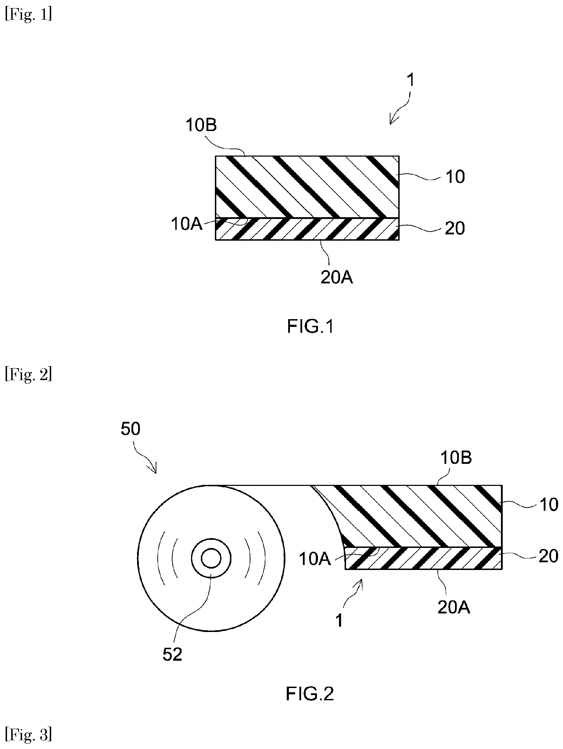

The PSA sheet disclosed herein has a PSA layer on one face (first face) of a resin film as a substrate. Fig. 1 schematically illustrates a configuration of the PSA sheet according to an embodiment. This PSA sheet 1 includes a resin film 10 as the substrate and a PSA layer 20 provided on one face (first face) 10A thereof, and is used by applying the PSA layer 20 to an adherend. In the PSA sheet 1, the other face (backside, second face) 10B of the resin film 10 forms a releasable surface (release face). Prior to use (i.e., before applied to the adherend), the PSA sheet 1 can be wound around a core (wiring core) 52 in a rolled form so that a surface (adhesive face) 20A of the PSA layer 20 is brought into contact with the backside 10B of the resin film 10 as shown in, for example, Fig. 2, which may form a roll body 50 with the surface 20A protected. The PSA sheet may also be in the form of a roll body without the core 52, i.e., a so-called coreless roll body in which the single PSA sheet 1 is wound. Alternatively, the PSA sheet 1 prior to use may be not only in the form of the roll body, but also in the form of a stacked body in which the PSA sheets in sheet form (sheet leaf form) are stacked with the surface of a PSA layer of one PSA sheet contacting the backside of another PSA sheet so as to protect the adhesive face 20A. Alternatively, the surface 20A of the PSA sheet 1 prior to use may be protected not by the backside of the substrate constituting the PSA sheet but by a release liner.

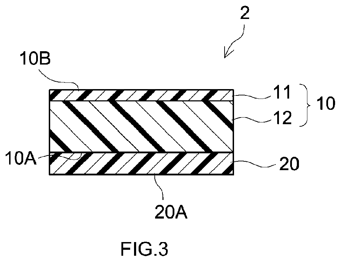

In one preferred embodiment of the PSA sheet 1 of this embodiment, the resin film 10 includes a backside layer 11 constituting the other face (second face) 10B of the resin film 10, and a support layer 12 disposed on the inner side of the backside layer 11 (on the side where the PSA layer 20 is provided), as shown, for example, in Fig. 3. The backside layer 11 is composed of a resin composition containing a release agent, thereby allowing the surface of the backside layer 11 (also serving as the second face 10B of the resin film 10) to serve as the release face. The support layer 12 may be made of a resin composition that does not contain a release agent, or may be made of a resin composition that contains a release agent. In an embodiment where one face 10A of the resin film 10 is formed by the support layer 12, as shown in an example of Fig. 3, the support layer 12 is preferably a layer made of a resin composition that does not contain a release agent from the viewpoint of anchorage of the PSA layer 20 to the resin film 10. In a PSA sheet 2 shown in Fig. 3, the resin film 10 has a two-layer structure consisting of the backside layer 11 and the support layer 12, but the structure of the resin film 10 is not limited to a two-layer structure.

<PSA Sheet>

The PSA sheet disclosed herein includes the resin film as the substrate and the PSA layer provided on the first face of the substrate, the second face of the substrate being the release face. The above-described PSA sheet preferably has a high-speed peel strength of 4.5 N/20mm or higher, which is measured under conditions of a tensile speed of 30 m/min after 30 minutes of application to a stainless steel (SUS) plate. Here, the tensile speed of 30 m/min is a measurement condition set assuming, for example, a situation in which assist gas is blown onto a PSA sheet applied to an object to be processed when machining the object with a short-wavelength laser beam. If the above assist gas supplied during laser machining causes floating of the PSA sheet (typically, partial peeling of the PSA sheet due to the assist gas entering an adhesive interface between the object to be processed and the PSA sheet from a cut portion of the PSA sheet by the laser beam due to its wind pressure), inconveniences may occur; for instance, when the PSA sheet is exposed to heat while the fixation of the PSA sheet to the object to be processed (joining by a PSA) is being released, the heat shrinkage of the sheet increases, and thus the surface of the object to be processed is easily exposed on each side of the above cut portion. According to the PSA sheet having a high-speed peel strength of 4.5 N/20mm or higher, it is possible to effectively suppress the floating of the PSA sheet during cutting.

From the viewpoint of achieving higher effectiveness, in some embodiments, the high-speed peel strength of the PSA sheet may be, for example, 5.0 N/20mm or higher, 5.5 N/20mm or higher, or 6.0 N/20mm or higher. Although the upper limit of the high-speed peel strength is not particularly limited, from the viewpoint of reducing the workload and preventing tearing of the PSA sheet when peeling off the PSA sheet from the object to be processed, in some embodiments, the high-speed peel strength of the PSA sheet may be, for example, 20 N/20mm or lower, 15 N/20mm or lower, 10 N/20mm or lower, or 8 N/20mm or lower. The high-speed peel strength is measured specifically by a method described in examples below. The high-speed peel strength can be adjusted, for example, by the selection of the type and thickness of the PSA layer, the kind and amount of cross-linking agent used, and the kind and amount of release agent used, as well as by the use of optional components such as tackifier resin.

The PSA sheet disclosed herein preferably has a fluctuation range of self-backside adhesive strengths of 1.5 N/20mm or lower. According to the PSA sheet that has a fluctuation range of self-backside adhesive strengths of 1.5 N/20mm or lower, peeling noise generated when pulling and peeling off the PSA sheet from the surface of a protective material for protecting the surface of the PSA layer of the PSA sheet prior to use (typically, the backside of the substrate) can be reduced, thereby suppressing noise and achieving an improvement in the work environment. Noisiness due to the peeling noise of the PSA sheet can be evaluated, for instance, by a method described in examples.

In implementing the art disclosed herein, it is not necessary to elucidate the mechanism in which a difference between the maximum and minimum values (fluctuation range) of self-backside adhesive strength contributes to the magnitude of the peeling noise. However, it is considered that in the case of a PSA sheet having a large fluctuation range of self-backside adhesive strengths, there occurs a stick-slip fracture in which peeling progresses/stops repeatedly between the release face (backside) and the adhesive face, causing "ripping" noise. However, this situation is not interpreted to be limited to this mechanism.

From the viewpoint of achieving higher effectiveness, in some embodiments, the fluctuation range of self-backside adhesive strengths of the PSA sheet may be, for example, lower than 1.5 N/20mm, 1.4 N/20mm or lower, or 1.0 N/20mm or lower. The lower limit of the fluctuation range of self-backside adhesive strengths is 0 N/20mm in principle, and the smaller the fluctuation range, the more preferable it is from the viewpoint of reducing peeling noise. In some embodiments, from a practical point of view, such as balance with other properties or ease of manufacture, the fluctuation range of the self-backside adhesive strengths may be, for example, 0.01 N/20mm or higher, 0.05 N/20mm or higher, or 0.1 N/20mm or higher. The fluctuation range of self-backside adhesive strengths is measured by a method described in examples below. The fluctuation range of self-backside adhesive strengths can be adjusted, for example, by the selection of a constituent material (for example, the kind and amount of release agent used) and the surface treatment of the second face of the substrate, the selection of the kind of the PSA constituting the PSA layer, the presence or absence of use of optional components such as a cross-linking agent or tackifier resin, the selection of the kind or amount thereof if used, and the like.

In the PSA sheet disclosed herein, the average value of the self-backside adhesive strengths is for instance, preferably 5 N/20mm or lower from the viewpoint of easily decreasing the fluctuation range of self-backside adhesive strengths. It is more preferably 4.5 N/20mm or lower, and may be 4 N/20mm or lower. The average value of self-backside adhesive strengths being low can be advantageous in the PSA sheet that constitutes, for example, a roll body, from the viewpoint of reducing the labor required for unwinding the PSA sheet to improve workability, and preventing the PSA sheet stretched in unwinding from shrinking after being applied to the adherend and from floating out of the adherend. The lower limit of the average value of self-backside adhesive strength is not particularly limited, but from the viewpoint of facilitating the balance with other properties, it is, for instance, preferably 0.5 N/20mm or higher, and more preferably 1 N/20mm or higher, and may be 1.5 N/20mm or higher. For example, in the case of a PSA sheet constituting a roll body, it is preferable that the average value of self-backside adhesive strengths is not too low from the viewpoint of avoiding inconveniences such as the tendency of the sheet to be rolled out excessively from the roll. The average value of the self-backside adhesive strengths is measured by a method described in examples below.

The PSA sheet disclosed herein preferably has a slip resistance value of 3.5 N or more on the second face of the above-described substrate. In this specification, the slip resistance value of the second face of the substrate is the dynamic friction force between the backside of the PSA sheet and an SUS plate, and is specifically measured by a method described in the examples below. If the slip resistance value is extremely small, for example, when PSA sheets are stacked flat while being applied to the object to be processed (adherend) like an SUS plate or other metal plates, the PSA sheet may easily slide sideways, causing the stacked sheets to collapse. According to the PSA sheet that has a slip resistance value of 3.5 N or more on the second face of the substrate, the slipperiness of the adherend can be effectively suppressed.

From the viewpoint of achieving higher effectiveness, in some embodiments, the second face of the substrate in the PSA sheet may have a slip resistance value of, for example, 4 N or more, 4.5 N or more, or 5 N or more. The upper limit of the slip resistance value of the second face of the substrate in the PSA sheet is not particularly limited. From the viewpoint of easily suppressing the fluctuation range of self-backside adhesive strengths, in some embodiments, the above slip resistance value may be, for example, 10 N or less, 15 N or less, or 20 N or less.

In the PSA sheet disclosed herein, in some embodiments, a low-speed peel strength measured under conditions of a tensile speed of 0.3 m/min after 30 minutes of application to a stainless steel plate is preferably 10 N/20mm or lower, more preferably 8 N/20mm or lower, and particularly preferably 5 N/20mm or lower, and may be 4.5 N/20mm or lower. Here, the tensile speed of 0.3 m/min is a measurement condition set assuming that, for example, after machining an object (adherend) to be processed, a PSA sheet applied to the object to be processed is peeled and removed. The lower the low-speed peel strength, the more preferable it is from the viewpoint of improving workability by reducing the labor required to peel off an unneeded PSA sheet, and also from the viewpoint of preventing the PSA from adhering to the surface of the adherend after peeling off the PSA sheet (so-called "adhesive residue"). The lower limit of the low-speed peel strength is not particularly limited. From the viewpoint of easily achieving other properties (for example, a high-speed peel strength of a predetermined level or higher) as well, in some embodiments, the low-speed peel strength may be 0.5 N/20mm or higher, 0.8 N/20mm or higher, or 1.0 N/20mm or higher. The low-speed peel strength is measured by a method described in examples below. The low-speed peel strength can be adjusted, for example, by the selection of the type and thickness of the PSA layer, the kind and amount of cross-linking agent used, and the kind and amount of release agent used, as well as by the use of optional components such as tackifier resin.

The PSA sheet disclosed herein encompasses embodiments in which one or more properties of the above-described high-speed peel strength, fluctuation range of self-backside adhesive strengths, and slip resistance value of the second face of the substrate are not limited, and in such embodiments, the PSA sheet is not limited to those satisfying the above properties.

In some embodiments of the PSA sheet disclosed herein, the PSA sheet preferably has a laser beam absorbance in a wavelength range of laser beams used for machining (typically, the laser beam absorbance at the center wavelength of the laser beam) of 20% or more. The laser beam absorbance means the proportion of laser beams actually absorbed in the PSA sheet in the whole laser beams with which the PSA sheet is irradiated. According to the PSA sheet having a laser beam absorbance of 20% or more, the laser beams can be efficiently absorbed.

In some embodiments, the laser beam absorbance of the PSA sheet may be, for example, 25% or more, 30% or more, 45% or more, 60% or more, or 75% or more. The laser beam absorbance of the PSA sheet may be 100%, but is preferably 95% or less in terms of practical use and may be 90% or less.

In this specification, the "laser beam absorbance" means a value calculated by the following formula (I) from the transmittance T (%) and reflectance R (%) of a sample measured using a spectrophotometer (for example, a spectrophotometer under model number "U-4100" available from Hitachi High-Technologies Corporation or its equivalent).

$$\text{Absorbance A}(\%) = 100(\%) \cdot \text{T}(\%) \cdot \text{R}(\%) \qquad \text{(I)}$$

In this specification, for example, the "laser beam absorbance in the wavelength range between 900 nm and 1100 nm" refers to the minimum laser beam absorbance in that wavelength range. In this specification, the laser beam absorbance refers to the laser beam absorbance at the backside of the PSA sheet or substrate (the face side irradiated with the laser beam, i.e., the face opposite to the face which is applied to the workpiece), unless otherwise specified.

The transmittance and reflectance of the PSA sheet are not particularly limited. In some embodiments, the PSA sheet may have a laser beam transmittance of less than 70%, for example, less than 50%, at the wavelength where the laser beam absorbance is the minimum in the wavelength range of laser beams used for machining. In some embodiments, the PSA sheet may have a laser beam reflectance of less than 50%, for example, less than 40%, less than 20%, or less than 10%, at the above wavelength where the laser beam absorbance is the minimum. The PSA sheet that satisfies at least one (preferably both) of the above-described transmittance and reflectance is more likely to have the preferred laser beam absorbance disclosed herein.

A laser beam absorbent can be used as needed to adjust the laser beam absorbance. As the laser beam absorbent, various materials that can serve to increase the absorbance of the laser beams used for machining (typically, the absorbance at least at the center wavelength) can be preferably used. The PSA sheet may contain one or two or more kinds of laser beam absorbents. In the PSA sheet containing two or more kinds of laser beam absorbents, these laser beam absorbents may be used in a blend, or may be contained in different respective layers in the PSA sheet.

In this specification, the "laser beam absorbent" refers to a material that can serve to increase the above-described laser beam absorbance compared to the case where the laser beam absorbent is not used. The "prescribed absorbent" in this specification refers to the laser beam absorbent that contains, as a constituent element, a metal having a specific heat of less than 900 J/kg ·K and a thermal conductivity of less than 200 W/m ·K. In this specification, a layer containing a laser beam absorbent (possibly a prescribed absorbent) may be referred to as a "laser beam-absorbing layer".

Examples of the laser beam absorbent usable in the PSA sheet disclosed herein include metals such as aluminum, stainless steel, titanium, nickel, zirconium, tungsten, copper, silver, gold, zinc, molybdenum, chromium and alloys primarily containing these metals; metal compounds such as oxides (e.g., titanium oxide, aluminum oxide, etc.), nitrides, and carbides of the above metals; carbon materials such as carbon black and carbon fiber; organic compounds such as phthalocyanine-based compounds, cyanine-based compounds, aminium-based compounds, naphthalocyanine-based compounds, naphthoquinone-based compounds, diimonium-based compounds, anthraquinone-based compounds, and aromatic dithiol-based metal complexes (e.g., nickel complexes); and the like. In the laser beam-absorbing layer containing the laser beam absorbent in the resin composition, the laser beam absorbing agent used is preferably a material having a higher thermal decomposition temperature than the resin component constituting the above laser beam-absorbing layer.

When a laser beam absorbent is used in a powder form, the shape of particles forming the powder is not particularly limited. For instance, it can be flaky, spherical, needle-shaped, polyhedral, irregularly-shaped, etc. Usually, a flaky, spherical or needle-shaped laser beam absorbent can be preferably employed. The mean particle diameter of the laser beam absorbent is not particularly limited. It can be, for instance, 0.005 $\mu$m or greater and 20 $\mu$m or less. From the viewpoint of the dispersibility, it is usually preferable to use a laser beam absorbent having a mean particle diameter of 10 $\mu$m or less, or 5 $\mu$m or less. From the viewpoint of efficiently and easily obtaining an increase in laser beam absorbance through the use of a small amount of the laser beam absorbent, in some embodiments, the laser beam absorbent may have a mean particle diameter of, for instance, 3 $\mu$m or less, 1 $\mu$m or less, 0.6 $\mu$m or less, 0.4 $\mu$m or less, or even 0.3 $\mu$m or less. From the viewpoint of the ease of handling and uniformly dispersing the powder, in some embodiments, the laser beam absorbent may have a mean particle diameter of, for instance, 0.008 $\mu$m or greater, 0.01 $\mu$m or greater, 0.05 $\mu$m or greater, 0.1 $\mu$m or greater, 0.15 $\mu$m or greater, or even 0.2 $\mu$m or greater. As used in the present specification, unless otherwise specified, the "mean particle diameter" refers to a particle diameter at 50% cumulative volume (i.e., 50% volume-based mean particle diameter) in a size distribution measured using a particle counter based on the laser scattering/diffraction method.

In some embodiments, the laser beam-absorbing layer can contain carbon black as the above-described laser beam absorbent. For instance, carbon black having a mean particle diameter of 10 nm to 500 nm (more preferably 10 nm to 120 nm) can be used. Carbon black may be used alone or in combination with other laser beam absorbents.

In some embodiments, the laser beam-absorbing layer can contain at least one of metal powder and metal compound powder as the laser beam absorbent. Such laser beam absorbents are preferable because they can suitably maintain the ability to absorb the prescribed laser beam while enduring the generated heat associated with the absorption of the prescribed laser beam. Suitable examples of this kind of laser beam absorbent include titanium oxide powder, aluminum oxide powder, metallic aluminum powder, and the like.

The laser beam-absorbing layer is typically a layer containing a laser beam absorbent in a resin component. Non-limiting examples of materials that may be employed as such a resin component include polyester resins such as polyethylene terephthalate (PET) and polybutylene terephthalate (PBT); polyolefin resins such as polyethylene, polypropylene, ethylene-propylene copolymer, and polypropylene-polyethylene blend resins; other resins such as vinyl chloride resin, vinyl acetate resin, and polyamide resin; and the like. A resin composition obtained by adding the laser beam absorbent to such a resin material can be typically formed into a film, thereby producing the laser beam-absorbing layer.

When using the laser beam absorbent, the amount thereof used is not particularly limited. In some embodiments, the amount of laser beam absorbent used may be, for example, 0.01% by weight or more of the laser beam-absorbing layer containing the laser beam absorbent, 0.05% by weight or more, or 0.1% by weight or more. From the viewpoint of reducing laser cutting residues and suppressing reflectance, in some embodiments, the content of the laser beam absorbent may be, for example, 10% by weight or less of the laser beam-absorbing layer containing the laser beam absorbent, 5% by weight or less, 3% by weight or less, or 2% by weight or less.

In some embodiments, the PSA sheet disclosed herein can preferably use, as the above-described laser beam absorbent, the prescribed absorbent, i.e., the laser beam absorbent that contains, as a constituent element, a metal having a specific heat of less than 900 J/kg K and a thermal conductivity of less than 200 W/m ·K. The prescribed absorbent can be selected from the group consisting of any one single metal that satisfies the above specific heat and thermal conductivity; alloys containing more than 50%, 70% or 90% by weight of any one metal that satisfies the above specific heat and thermal conductivity; alloys containing more than 50%, 70% or 90% by weight in total of two or more metals that satisfy the above specific heat and thermal conductivity; and metal compounds containing a metal equivalent to such a single metal or alloy as a constituent element. Examples of the prescribed absorbent as used herein include iron, iron alloys (e.g., iron alloys containing at least one element selected from the group consisting of Cr, Ni, Si, W, Mn, Si, and C), and metal compounds (iron-based compounds) containing a metal equivalent to the above iron or iron alloy (iron-based metal) as a constituent element. For example, oxides of the above iron-based metals (iron-based oxides) can be preferably used as the above iron-based compound. Other examples of the prescribed absorbent include Mn-based compounds that contain metals (Mn-based metals) equivalent to Mn or Mn alloys as a constituent element, and among them, Mn-based oxides are preferable. The prescribed absorbents can be used alone or in combination of two or more kinds. In the PSA sheet containing two or more kinds of prescribed absorbents, these prescribed absorbents may be used in a blend, or may be contained in different respective layers in the PSA sheet.

In general, as compared to the specific heat and thermal conductivity of a metal alone, a metal compound containing the metal as a constituent element tends to have lower specific heat and thermal conductivity values. Therefore, in some embodiments of the PSA sheet disclosed herein, as the prescribed absorbent, it is preferable to use a metal compound containing, as a constituent element, a metal that satisfies preferable specific heat and thermal conductivity values disclosed herein. The metal compound usable as the prescribed absorbent may be, for instance, an oxide, sulfide, carbide, nitride, hydroxide or oxyhydroxide of a metal that satisfies preferable specific heat and thermal conductivity values disclosed herein. Other examples of the metal compound usable as the prescribed absorbent include an organometallic compound (a composite, etc.) that includes ions of the metal. From the viewpoint of suitably maintaining the ability to absorb the prescribed laser beam while enduring the generated heat associated with the absorption of the prescribed laser beam, oxides, sulfides, carbides and nitrides of the metals are preferable, and the oxides are particularly preferable. Examples of the oxides include, but are not limited to, iron oxides ($FeO$, $Fe_3O_4$, $Fe_2O_3$, etc.), manganese dioxide, titanium black, chromium oxides ($CrO$, $Cr_2O_3$, etc.) and ferrite. Examples of the sulfides include, but are not limited to, iron sulfides and molybdenum sulfides.

In the case where the PSA sheet disclosed herein contains the prescribed absorbent, the prescribed absorbent content is not particularly limited, and it can be selected as appropriate, for instance, in a range of 0.01% by weight or more and 20% by weight or less of the PSA sheet. In some embodiments, the prescribed absorbent content can be, for instance, 0.05% by weight or more, 0.1% by weight or more, 0.3% by weight or more, 0.5% by weight or more, or even 0.8% by weight or more. With increasing prescribed absorbent content, the prescribed laser beam absorbance tends to increase. On the other hand, an excessive prescribed absorbent content may facilitate dispersion of the energy of the absorbed prescribed laser beam in in-plane directions, resulting in a greater energy loss. From such a standpoint, the prescribed absorbent content is usually suitably 15% by weight or less of the PSA sheet, preferably 10% by weight or less, and more preferably 7% by weight or less, and may be 5% by weight or less, or even less than 5% by weight.

In addition to the prescribed absorbent, the PSA sheet disclosed herein may secondarily contain a non-prescribed laser beam absorbent as necessary. Hereinafter, such a non-prescribed laser beam absorbent used secondarily is also referred to as a "secondary absorbent". For instance, the secondary absorbent may be used for purposes such as increasing the absorbance of the PSA sheet, adjusting the transmittance or reflectance, adjusting the appearance, etc. As the secondary absorbent, it is possible to use metals such as aluminum, copper, silver and gold; metal compounds such as oxides, nitrides and carbides of these metals; carbon black; organic compounds such as phthalocyanine-based compounds, cyanine-based compounds, aminium-based compounds, naphthalocyanine-based compounds, naphthoquinone-based compounds, diimmonium-based compounds and anthraquinone-based compounds; and the like.

The secondary absorbent is preferably used in an amount equivalent to less than 50% of the total amount of laser beam absorbents contained in the PSA sheet (i.e., the combined amount of the prescribed and secondary absorbents); or it may be less than 25%, less than 10%, or even less than 5% based on the weight. The PSA sheet may also be substantially free of a secondary absorbent. Here, being substantially free of a secondary absorbent means that a secondary absorbent is not used at least intentionally. The total amount of laser beam absorbents in the PSA sheet is suitably 25% by weight or less of the PSA sheet, more preferably 20% by weight or less, 15% by weight or less, or 10% by weight or less.

When the PSA sheet disclosed herein contains the prescribed absorbent, the carbon black (CB) content in the PSA sheet is preferably less than 0.3% by weight of the PSA sheet, more preferably less than 0.1% by weight, yet more preferably less than 0.05% by weight, or particularly preferably less than 0.02% by weight. With decreasing CB content, the PSA sheet tends to have improved anti-blackening properties. The PSA sheet may be substantially free of CB. In other words, in the PSA sheet, CB may not be used at least intentionally. The PSA sheet disclosed herein contains the prescribed absorbent, and therefore, a workpiece can be efficiently machined even when CB is not used or used only in a limited amount as described above. According to such a PSA sheet, an increase in efficiency of workpiece machining can be favorably achieved with anti-blackening properties.

In some embodiments, as the prescribed absorbent, a black metal compound can be preferably used. With the use of the black metal compound, the laser beam absorbance of the PSA sheet can be efficiently increased. Thus, even when CB is not used or used only in a limited amount, a PSA sheet having the aforementioned preferable laser beam absorbance can be favorably obtained. Studies by the present inventors have revealed that, surprisingly, unlike CB, such a black metal compound is less likely to cause black residues. Therefore, with the use of the black metal compound, an increase in efficiency of workpiece machining can be favorably achieved with anti-blackening properties.

Examples of the black metal compound include, but are not limited to, iron oxides, manganese dioxide, titanium black, chromium oxides, iron sulfides and molybdenum sulfides. Black metal compounds preferable in terms of availability include iron oxides (e.g., $FeO$, $Fe_3O_4$, etc.), titanium black and manganese dioxide. The titanium black refers to black particles having titanium atoms and preferably black particles of titanium oxynitride, lower titanium oxides, etc. Examples of particularly preferable black metal compounds include iron oxides and titanium black.

The content of the black metal compound in the PSA sheet can be, for instance, 0.05% by weight or more of the PSA sheet, and from the viewpoint of improving the laser beam absorbance, it may be 0.1% by weight or more, 0.3% by weight or more, 0.5% by weight or more, or even 0.8% by weight or more. From the viewpoint of reducing energy loss due to dispersion in the in-plane direction of the PSA sheet, the content of the black metal compound is normally appropriately 15% by weight or less of the PSA sheet, and it is preferably 10% by weight or less, and more preferably 7% by weight or less, and may be 5% by weight or less, or less than 5% by weight. The proportion of black metal compounds in the prescribed absorbents may be, for example, more than 50% by weight, may be 70% by weight or more, 90% by weight or more, or substantially 100% by weight.

The backside of the PSA sheet preferably has a lightness $L^*$ of less than 95. In some embodiments, for instance, the backside of the PSA sheet may have a lightness $L^*$ of less than 90, less than 70, less than 60, less than 50, less than 45, or even less than 40. By setting the backside to have a low lightness $L^*$ in this way, the laser beam absorbance of the PSA sheet can be readily increased. The lower limit of the lightness $L^*$ is not particularly limited. From the viewpoint of the design capability, surface printability, weathering resistance, easy identification, etc., of the PSA sheet, it is usually suitably 20 or higher, or may be 30 or higher. In some embodiments, the backside of the PSA sheet may have a lightness $L^*$ of, for instance, 40 or higher, or even 50 or higher.

The chromatic coordinate $a^*$ of the backside of the PSA sheet is not particularly limited. In some embodiments, from the same viewpoint as the lightness $L^*$, the backside of the PSA sheet may have a chromatic coordinate $a^*$ in a range, for instance, between -15 and +15, between -10 and +10, between -5 and +7, between -3 and +5, between -1.5 and +3, or even between 0 and +2. The chromatic coordinate $b^*$ of the backside of the PSA sheet is not particularly limited. For instance, it may be in a range between -15 and +15, between -10 and +10, between -5 and +5, between -3 and +2, or even between -1.5 and +1.

As for the front face of the PSA sheet, suitable lightness $L^*$ and chromatic coordinates $a^*$ and $b^*$ can be selected in the same ranges described above for those of the backside of the PSA sheet. The lightness $L^*$ and chromatic coordinates $a^*$ and $b^*$ can be each comparable or different between the front face and backside of the PSA sheet.

In the present specification, the lightness $L^*$ and chromatic coordinates $a^*$ and $b^*$ refer to the lightness $L^*$ and chromatic coordinates $a^*$ and $b^*$, respectively, specified by the $L^*a^*b^*$ color space based on the definition suggested by the International Commission on Illumination in 1976 or specified by JIS Z 8729. Specifically, the lightness $L^*$ and chromatic coordinates $a^*$ and $b^*$ can be determined through measurement using a colorimeter (trade name "CR-400" available from Konica Minolta Holdings Inc.; chroma meter). The lightness $L^*$ and chromatic coordinates $a^*$ and $b^*$ can be adjusted by the selection of the kind of laser beam absorbent and its amount used, the presence or absence of use of other colorant(s) besides the laser beam absorbent, the selection of the kind of colorant and its amount used if any, and the like.

The thickness of the PSA sheet is not particularly limited. It is usually suitably about 10 μm to 200 μm. From the viewpoint of the handling of the PSA sheet or the like, in some embodiments, the PSA sheet may have a thickness of, for instance, 20 μm or greater, 25 μm or greater, 40 μm or greater, 55 μm or greater, or even 80 μm or greater. For example, from the viewpoint of rapid and precise laser machining, the PSA sheet may have a thickness of, for instance, 150 μm or less, 120 μm or less, or even 100 μm or less. In some cases, the thickness of the PSA sheet can be 80 μm or less, 60 μm or less, or even 50 μm or less.

<Substrate>

The PSA sheet disclosed herein has a resin film as the substrate. Examples of the resin material that forms the resin film include, but are not limited to, polyester resins such as polyethylene terephthalate (PET) and polybutylene terephthalate (PBT); polyolefin resins such as polyethylene, polypropylene, ethylene-propylene copolymer, and polypropylene-polyethylene blend resin; other resins such as vinyl chloride resin (typically, soft vinyl chloride resin), vinyl acetate resin, and polyamide resin; and the like.

From the viewpoint of various types of processability or machinability due to the flexibility of the substrate, or from the viewpoint of cuttability and anti-blackening properties of the PSA sheet by the prescribed laser beam, for example, in some embodiments, a polyolefin resin film or polyester resin film can be preferably used as the above resin film.

Here, the polyolefin resin film refers to a resin film whose primary component is a polyolefin resin. As used herein, the primary component refers to a component whose content is more than 50% by weight unless otherwise specified. For example, the primary component of the resin film being a polyolefin resin means that the resin film contains a polyolefin resin in an amount of more than 50% by weight of the total weight of the resin film. Suitable examples of the polyolefin resin film include resin films containing as the primary component, a polyethylene (PE) resin and/or polypropylene (PP) resin. The polyolefin resin film may include a PE resin and/or PP resin, and the total amount of the PE and PP resins may be more than 50% by weight of the polyolefin resin film, or preferably 70% by weight or more, for instance, 85% by weight or more. In the resin film that contains a PE resin but is free of PP resin, the total amount thereof is equal to the PE resin content.

The PE resin may include, as the primary component, various kinds of polymer (ethylenic polymer) in which ethylene is the primary monomer unit. It can be a PE resin substantially formed of one, two or more kinds of ethylenic polymer. The ethylenic polymer can be ethylene homopolymer or a copolymer (random copolymer, block copolymer, etc.) of ethylene as the primary monomer and other $\alpha$-olefin as a secondary monomer. Suitable examples of the $\alpha$-olefin include $\alpha$-olefins with 3 to 10 carbon atoms, such as propylene, 1-butene (possibly a branched 1-butene), 1-hexene, 4-methyl-1-pentene and 1-octene. For instance, a PE resin that can be preferably employed contains, as the primary component, an ethylenic polymer in which an $\alpha$-olefin as the secondary monomer is copolymerized in an amount up to 10% by weight (typically up to 5% by weight).

The PE resin may also include a copolymer of ethylene and a monomer having a different functional group (a functional group-containing monomer) in addition to the polymerizable functional group; or it can be a PE resin obtained by copolymerizing such a functional group-containing monomer with an ethylenic polymer, etc. Examples of the copolymer of ethylene and the functional group-containing monomer include ethylene-vinyl acetate copolymer (EVA), ethylene-acrylic acid copolymer (EAA), ethylene-methacrylic acid copolymer (EMAA), ethylene-methyl acrylate copolymer (EMA), ethylene-ethyl acrylate copolymer (EEA), ethylene-methyl methacrylate copolymer (EMMA), and ethylene-(meth)acrylic acid (i.e., acrylic acid and/or methacrylic acid) copolymer crosslinked with a metal ion.

The density of the PE resin is not particularly limited. The concept of the PE resin herein includes all of high-density polyethylene (HDPE), middle-density polyethylene (MDPE), low-density polyethylene (LDPE) and linear low-density polyethylene (LLDPE). In an embodiment, the PE resin may have a density of, for instance, about 0.90 g/cm$^3$ to 0.94 g/cm$^3$. Preferable PE resins include LDPE and LLDPE.

The PP resin may contain, as the primary component, various kinds of polymer (propylene-based polymer) formed from propylene as the primary monomer unit, that is, polymer which contains propylene in an amount of more than 50% by weight of all the monomers. The PP resin can be substantially formed of one, two or more kinds of propylene-based polymer. The concept of the propylene-based polymer herein encompasses homopolypropylene as well as random copoymers (random polypropylene) and block copolymers (block polypropylene) of propylene and other monomer(s).

The first face of the substrate (i.e., the surface on the side where the PSA layer is provided) may be subjected to appropriate surface treatment as necessary to enhance tight adhesiveness to the PSA layer. Examples of the surface treatment to enhance the tight adhesiveness include corona discharge treatment, acid treatment, UV irradiation treatment, plasma treatment, and application of an undercoating agent (primer).

In the PSA sheet disclosed herein, the second face of the substrate is a release face. The second face of the substrate being a release face typically means that a PSA sheet in which the surface (adhesive face) of a PSA layer provided on a first face of a substrate is brought into contact with the above release face can be pulled and peeled off without leaving any adhesive residue on the release face (with no residue of the PSA).

In some embodiments, the resin composition forming the above second face (hereinafter also referred to as a "second face forming material") preferably contains a release agent. The substrate with such a second face can be understood to be a substrate where the above release agent is kneaded into at least the second face. According to this embodiment, a PSA sheet that has a slip resistance value of the second face of 3.5 N or more and a fluctuation range of self-backside adhesive strengths of 1.5 N/20mm or lower can be suitably achieved. The above second face forming material may form at least the second face of the substrate, but may form, for example, only a second face side of the above substrate or the entire faces of the substrate.

As the second face forming material, a resin composition containing at least a release agent and a resin material can be preferably used. The resin material can be various materials exemplified as the resin material forming the resin film as the substrate, and examples thereof include, but are not limited to, polyester resins such as polyethylene terephthalate (PET) and polybutylene terephthalate (PBT); polyolefin resins such as polyethylene, polypropylene, ethylene-propylene copolymer, and polypropylene-polyethylene blend resin; other resins such as vinyl chloride resin (typically, soft vinyl chloride resin), vinyl acetate resin, and polyamide resin; and the like.

Examples of the release agent usable as a constituent component of the second face forming material (i.e., the release agent for second face kneading) include ethylene-vinyl alcohol copolymer, fatty acid amide additives, low molecular weight polyolefin waxes, long chain alkyl-based additives, silicone-based release agents, and the like. The release agents can be used alone or in combination of two or more kinds as appropriate. A release agent that can be well mixed with the resin component contained in the second face forming material is preferably selected.

The above ethylene-vinyl alcohol copolymer usable is, for example, an ethylene-vinyl alcohol copolymer obtained by saponifying a copolymer of ethylene and vinyl acetate, vinyl formate, vinyl propionate, or vinyl acetate.

The fatty acid amide additives include, for example, saturated fatty acid bisamides, unsaturated fatty acid bisamides, aromatic bisamides, substituted ureas, and the like.

Examples of the fatty acid amide additive include methylene bis-stearic acid amide, ethylene bis-stearic acid amide, ethylene bis-oleic acid amide, N,N-dioleoyl adipic acid amide, and N-stearyl-N'- stearamide such as N-stearyl-N'-stearyl urea, and the like. These fatty acid amide additives may be used alone or in combination of two or more kinds.

The low molecular weight polyolefin waxes, such as polyethylene wax and polypropylene wax, for example, which have low molecular weights, can be used as appropriate.

As the long chain alkyl-based additive, low molecular weight additives having alkyl chains such as PEELOYL (registered trademark) 1010 and PEELOYL (registered trademark) 1010S (both manufactured by Ipposha Yushi Co., Ltd) can be used as appropriate.

Examples of the silicone-based release agent include silylated polyolefins, silicone resins, silicone alkoxy oligomers, silicone oligomers, silicone master pellets, silicone rubber powder, silicone emulsions, and the like. As a silylated polyolefin, for example, a silylated polyolefin produced by a method described in an example of Japanese Patent Application Publication No. 2011-26448 can be used.

The above long chain alkyl-based additive and the silicone-based release agent are suitable examples of the release agent for second face kneading because they are easy to achieve appropriate slip resistance value and to control the fluctuation range of self-backside adhesive strengths. Among these, a silicone-based release agent is particularly preferable. A silylated polyolefin is particularly preferable as the silicone-based release agent.

The release agent content in the second face forming material is not particularly limited but can be, for example, about 0.01 to 80% by weight of the entire second face forming material. From the viewpoint of making the fluctuation range of self-backside adhesive strengths and the slip resistance value in the desired value ranges, in some embodiments, the release agent content in the above second face forming material may be, for example, 0.1% by weight or more, 0.3% by weight or more, 0.5% by weight or more, 0.7% by weight or more, or even 1% by weight or more. From the viewpoint of compatibility with the above resin material or the like, the release agent content in the above second face forming material may be, for example, 70% by weight or less, 50% by weight or less, 30% by weight or less, or even 10% by weight or less.

The substrate may have a single-layer structure or a multi-layer structure with two or more layers. In some embodiments, the multi-layer structured substrate can be preferably employed. The multi-layer structured substrate has an advantage in that different functions and appearances can be easily imparted to the first and second faces of the substrate. In the multi-layer structured substrate, the kinds of resin materials forming the respective layers may be the same or different. The multi-layer structured substrate may have, for example, a two to five layered structure, especially, a two-layer structure or three-layer structure. In some other embodiments, the substrate may have a single-layer structure. The single-layer structured substrate can be advantageous in terms of productivity and quality stability of the substrate.

The method for forming the substrate is not particularly limited. A suitable method can be employed from heretofore known extrusion methods, for instance, an inflation extrusion method, and a casting method. The substrate may be unstretched or stretched uniaxially, biaxially, etc. The multi-layer structured substrate can be obtained by employing a single method or a suitable combination of methods among a method where resin compositions corresponding to the respective layers are molded simultaneously (e.g., by multi-layer inflation molding), a method where the respective layers are individually formed and then bonded together, a method where another layer is formed on top of a pre-formed layer by casting, and the like.

In some embodiments, the substrate can be a multi-layer structured substrate composed of two or more layers which include a backside layer formed of the above second face forming material and a support layer disposed on an inner side of the backside layer (i.e., on the side closer to the first face). Hereafter, the resin composition (i.e., the second face forming material) that forms the above backside layer in the substrate with such a structure is sometimes referred to specifically as a "backside layer forming material". The backside layer forming material that can be preferably used is a resin composition containing a release agent, as in the second face forming material described above. The backside layer forming material can be, for example, a resin composition containing at least a release agent and a resin material. The release agent usable as a constituent component of the backside layer forming material, the release agent content in the backside layer forming material, examples of the resin material usable as a constituent component of the backside layer forming material, and the like are all the same as those of the second face forming material described above, and thus a redundant description thereof is omitted.

The support layer can be formed of a resin composition. Hereafter, the resin composition that forms the support layer is sometimes referred to as a "support layer forming material". The resin components usable as the constituent component of the support layer forming material include, but are not limited to, polyester resin, polyolefin resin, vinyl chloride resin, vinyl acetate resin, and polyamide resin, which are the same as the resin materials that can form the resin film described above. The support layer forming material may contain one or a combination of two or more selected from such resin materials as appropriate. The support layer forming material may or may not contain a release agent that is similar to the release agent usable for the second face forming material. In an embodiment where one surface of the support layer also serves as the first face of the substrate, it is preferable that the support layer forming material does not contain any release agent from the viewpoint of improving the anchorage of the PSA layer to the support layer.

The kinds of resin materials forming the backside layer forming material and the support layer forming material may be the same or different. From the viewpoint of tight adhesiveness between the backside layer and the support layer, in some embodiments, the same kind of resin material that forms the support layer forming material can be preferably employed as the resin material forming the above backside layer forming material.

The substrate including the backside layer and the support layer disposed on the inner side of the backside layer can be obtained, for example, by stacking the support layer forming material and the backside layer forming material through co-extrusion molding. The above support layer forming material previously prepared in the form of a base resin film may be molded with the backside layer forming material through the co-extrusion molding. The number of constituent layers that are stacked to form each of the above layers is not particularly limited, and the above backside layer and above support layer may each be a single layer or may have a stacked structure if necessary.

The co-extrusion molding can employ methods commonly used in production and the like of films, sheets, etc., and is not particularly limited. Specifically, forming materials prepared in multiple layers, such as two, three, four or more layers, can be subjected to the co-extrusion molding by using an inflation method, a co-extrusion T-die method, or the like, for example. The use of these co-extrusion moldings is preferable in terms of cost and productivity.

In the PSA sheet disclosed herein, the method of forming the second face serving as the release face can preferably employ the method of forming the second face of the substrate using the second face forming material containing the release agent in the resin composition described above, but is not limited thereto. The method of forming the second face of the substrate serving as the release face can use one or a combination of two or more of various methods for realizing a PSA sheet that exhibits appropriate slip resistance value and fluctuation range of self-backside adhesive strengths. The second face of the substrate may be a release face, which is, for example, a surface subjected to surface treatment, involving applying a release treatment agent to a surface formed of a resin composition not containing a release agent. Such surface treatment can be carried out using a general silicone-based, long-chain alkyl-based, or fluorine-based release treatment agent, for example. The surface treatment involving the application of a release treatment agent may be further applied to the surface formed of a resin composition containing a release agent (i.e., the surface into which the above release agent is kneaded).

The substrate can contain a laser beam absorbent as necessary. In some embodiments, the laser beam absorbent preferably contains the prescribed absorbent.

A suitable example of the substrate containing the laser beam absorbent is a substrate containing a laser beam-absorbing layer (which can be made of the prescribed absorbent). At least one layer in the multi-layer structured substrate is preferably the laser beam-absorbing layer that contains the laser beam absorbent. The laser beam absorbance of the substrate containing the laser beam-absorbing layer can be set such that the laser beam absorbance of the PSA sheet is 20% or more. In some embodiments, the laser beam absorbance of the substrate may be, for example, 15% or more, and normally it is appropriately 20% or more, and may be 25% or more, 30% or more, 45% or more, 60% or more, or even 75% or more. The laser beam absorbance of the substrate may be 100%, but it is preferably 95% or less in terms of practical use and may be 90% or less. The transmittance and reflectance of the substrate can be selected from the same ranges of the transmittance and reflectance of the above PSA sheet as appropriate.

As the laser beam absorbent added to the substrate, one kind or a combination of two or more kinds thereof can be used among the aforementioned same examples of the laser beam absorbent that can be used in the PSA sheet. In an embodiment where the laser beam absorbent contains the prescribed absorbent, as the prescribed absorbent, solely one kind or a combination of two or more kinds thereof can be used among the aforementioned same examples of the prescribed absorbent that can be used in the PSA sheet. As for the laser beam absorbent content and the prescribed absorbent content in the substrate, examples of the laser beam absorbent content and the prescribed absorbent content in the PSA sheet can be applied, respectively.

The lightness L* and chromatic coordinates a* and b* of the backside of the substrate can be selected as appropriate from the same ranges of the lightness L* and chromatic coordinates a* and b* of the backside of the above PSA sheet. Similarly, the lightness L* and chromatic coordinates a* and b* of the front face of the substrate can be selected from the same ranges of the lightness L* and chromatic coordinates a* and b* of the front face of the above PSA sheet as appropriate.

Optional additives can be added to the substrate as necessary. Examples of such additives include fire-retardants, anti-static agents, photo-stabilizers (radical scavengers, UV absorbents, etc.), antioxidants, and the like.

The thickness of the substrate is not particularly limited and can be set to about, for instance, 5 μm to 150 μm. From the viewpoint of the handling of the substrate or the PSA sheet having the substrate, in some embodiments, the substrate may have a thickness of, for instance, 15 μm or greater, 20 μm or greater, 35 μm or greater, 50 μm or greater, or even 75 μm or greater. From the viewpoint of rapidity and precision of the laser machining, in some embodiment, the substrate can have a thickness of, for instance, 130 μm or less, 110 μm or less, or even 90 μm or less. In some cases, the substrate may have a thickness of 70 μm or less, 50μm or less, or even 40 μm or less.

In the substrate that includes the backside layer (preferably the backside layer formed of a resin composition containing a release agent) and the support layer, the thickness of the backside layer (if the backside layer has a stacked structure, the total thickness of this stacked structure) is not particularly limited. From the viewpoint of easily forming a backside layer with less variation in the thickness, the backside layer advantageously has a thickness of, for instance, 1 μm or greater, and may have a thickness of 3 μm or greater, or even 5 μm or greater. The art disclosed herein can be suitably implemented even in the form of the PSA sheet that includes the substrate in which the thickness of the backside layer is greater than 7 $\mu$m, greater than 10 $\mu$m, greater than 15 $\mu$m, greater than 20$\mu$m or even greater than 25$\mu$m. The upper limit of the thickness of the backside layer is not particularly limited but only needs to be less than the thickness of the entire substrate including the backside layer. The proportion of the thickness of the backside layer in the entire thickness of the substrate can be, for instance, 1% or more, and may be 3% or more, 5% or more, or even 8% or more. It can be, for instance, 95% or less, and may be 70% or less, 50% or less, 20% or less, or even 15% or less. The backside layer can have a thickness of, for instance, 60 $\mu$m or less, 40 $\mu$m or less, 30 $\mu$m or less, 20 $\mu$m or less, 10 $\mu$m or less, etc., depending on the entire thickness of the substrate. Decreasing the thickness of the backside layer can be advantageous from the viewpoint of achieving thinning of the PSA sheet.

From the viewpoint of suppression of variations in the thickness of the support layer and handling or the like of the resin film when using the pre-molded resin film as the support layer, the support layer normally has a thickness of 5 $\mu$m or greater, which is appropriate, and it preferably has a thickness of 10 $\mu$m or greater and may have a thickness of 25 $\mu$m or greater, 40 $\mu$m or greater, or even 60 $\mu$m or greater. The upper limit of the thickness of the support layer is not particularly limited but only needs to be less than the thickness of the entire substrate including the backside layer.

In a substrate including a laser beam-absorbing layer, the thickness of the laser beam-absorbing layer (in a substrate including a plurality of laser beam-absorbing layers, the total thickness of those layers) may be, for example, 3 $\mu$m or greater, 5 $\mu$m or greater, or even 10 $\mu$m or greater. From the viewpoint of rapidity and precision of the laser machining, in some embodiment, the proportion of the thickness of the laser beam-absorbing layer (in other words, a portion where the laser beam absorbent is disposed) in the entire thickness of the substrate can be, for instance, 20% or more, and may be 50% or more, 70% or more, or even 90% or more. It is noted that for a single-layer substrate composed of a laser beam-absorbing layer or a substrate composed of a plurality of laser beam-absorbing layers, the proportion of the thickness of the laser beam absorber layer(s) in the thickness of the entire substrate is 100%.

<PSA layer>

In the art disclosed herein, the PSA forming the PSA layer is not particularly limited. For instance, it is possible to use a known rubber-based PSA, acrylic PSA, polyester-based PSA, polyurethane-based PSA, silicone-based PSA, or the like. From the viewpoint of the adhesive properties and the cost, a rubber-based PSA or an acrylic PSA can be preferably employed. The rubber-based PSA herein refers to a PSA in which the primary component of polymer components (typically, a component in an amount of 50% by weight or more) contained in the PSA is a rubber-based polymer. The acrylic PSA herein refers to a PSA in which the primary component of polymer components therein is an acrylic polymer. The same goes for the polyester-based PSA, polyurethane-based PSA, silicone-based PSA, and the like.

The PSA layer may have a single-layer structure, or a stacked structure having two or more layers of the same or different compositions. From the viewpoint of enhancing the uniformity of the PSA layer to reduce the fluctuation range of self-backside adhesive strengths, the PSA layer preferably has a single-layer structure.

The PSA forming the PSA layer of the PSA sheet disclosed herein particularly preferably employs a rubber-based PSA from the viewpoint of exhibiting a sufficient high-speed peel strength. Examples of the rubber-based PSA include natural rubber-based PSA and synthetic rubber-based PSA.

The concept of the above natural rubber-based PSA encompasses those whose base polymer is natural rubber and those whose base polymer is modified natural rubber. The above natural rubbers are not particularly limited, but standard malaysian rubber (SMR), standard Vietnamese rubber (SVR), ribbed smoked sheet (RSS), pale crepe, etc. can be used. The above modified natural rubber suitably employed includes a structural portion derived from natural rubber, the structural portion content in the modified natural rubber being 50% by weight or more (for example, 60% by weight or more). Specific examples of the above modified natural rubber include, but are not limited to, acrylic modified natural rubber.

Specific examples of the rubber-based polymer as the base polymer of the synthetic rubber-based PSA include polybutadiene, polyisoprene, butyl rubber, polyisobutylene, styrene butadiene rubber (SBR), styrene-butadiene-styrene block copolymer (SBS), styrene-ethylene/butylene-styrene block copolymer (SEBS), styreneisoprene-styrene block copolymer (SIS), and the like.

In a preferred embodiment, the base polymer of the above rubber-based PSA layer is a natural rubber. For instance, the preferable natural rubber is one with a Mooney viscosity of about 10 to 60 under measurement conditions, i.e., MS (1+4) at 100°C (by use of a L-shaped rotor, preheating time of 1 minute, viscosity measurement time of 4 minutes, and test temperature of 100°C). The PSA sheet including the natural rubber-based PSA layer tends to quickly increase the tight adhesiveness to the adherend, compared to a PSA sheet including a synthetic rubber-based PSA layer. Thus, the floating or peeling of the PSA sheet due to the assist gas pressure can be suitably suppressed even when the time taken to apply the PSA sheet to an object to be processed (adherend) and then to perform laser machining on the object is shortened.

The rubber-based PSA layer in the art disclosed herein can be composed of a base polymer blended with other polymers (hereinafter referred to as a secondary polymer). Such a secondary polymer can be, for example, an acrylic polymer, a polyester-based polymer, a polyurethane-based polymer, a silicone-based polymer, or the like, which can also become a base polymer of an acrylic PSA, a polyester-based PSA, a polyurethane PSA, a silicone PSA or the like. Alternatively, the secondary polymer may be the above rubber-based polymer other than the base polymer. The secondary polymers may be used alone or in combination of two or more kinds.

Such a secondary polymer is used in an amount of 100 parts by weight or less (if two or more secondary polymers are used, the amount is the total of them) with respect to 100 parts by weight of the base polymer. Usually, the amount of secondary polymer used is appropriately set to 70 parts by weight or less with respect to the 100 parts by weight of the base polymer, and it is preferably 50 parts by weight or less. The rubber-based PSA layer may be one that is substantially free of secondary polymers (i.e., in which substantially 100% by weight of the polymer component is the base polymer). The rubber-based PSA layer may be one that is substantially free of polymer components other than the rubber-based polymer (for example, a rubber-based PSA layer that is substantially free of any polymer components other than natural rubber and modified natural rubber).

The PSA sheet disclosed herein may have an acrylic PSA layer formed of an acrylic PSA. The acrylic PSA preferably usable contains, as the base polymer (the primary component among polymer components), for instance, an acrylic polymer that has a monomer composition primarily containing an alkyl(meth)acrylate such as butyl(meth)acrylate and 2-ethylhexyl (meth)acrylate, with a modifying monomer copolymerizable with the alkyl (meth)acrylate added thereto as necessary. Examples of the modifying monomer include hydroxyl group-containing monomers such as 2-hydroxyethyl (meth)acrylate; carboxyl group-containing monomers such as (meth)acrylic acid; styrene-based monomers such as styrene; vinyl esters such as vinyl acetate; and the like. Such an acrylic PSA can be obtained by a commonly used polymerization method such as solution polymerization, emulsion polymerization, and ultraviolet ray (UV) polymerization.

The PSA layer (for example, the rubber-based PSA layer) can contain a laser beam absorbent as necessary. In other words, the PSA layer may be a laser beam-absorbing layer. In a PSA layer composed of a plurality of layers, at least one layer among them can contain a laser beam absorbent. For the laser beam absorbent to be contained in the PSA layer, one, two or more kinds can be selected for use from the laser beam absorbents exemplified above as appropriate. The laser beam absorbent content in the PSA layer is usually appropriately 5% by weight or less of the PSA layer. From the viewpoint of the adhesive properties, it is preferably 3% by weight or less, or may be 1% by weight or less. The art disclosed herein can be preferably implemented in an embodiment where the PSA layer is substantially free of a laser beam absorbent.

The PSA layer can contain a tackifier as necessary. As the tackifier, one, two or more kinds selected from various tackifier resins including the known rosin-based resins, rosin derivative resins, petroleum-based resins (C5, C9, etc.), terpene-based resins, and ketone-based resins. Examples of the above rosin-based resin include rosins such as gum rosin, wood rosin, and tall oil rosin, as well as stabilized rosin, polymerized rosin, and modified rosin. The above rosin derivative resins include an esterified compound, phenol-modified compound, and its esterified compound, of the above rosin-based resin, and the like. Examples of the petroleum-based resin include aliphatic petroleum resins, aromatic petroleum resins, copolymerized petroleum resins, alicyclic petroleum resins, and their hydrides. Examples of the above terpene-based resin include $\alpha$-pinene resin, $\beta$-pinene resin, aromatic modified terpene-based resin, terpene phenolic resin, and the like. Examples of the above ketone-based resin include ketone-based resins obtained by the condensation of ketones with formaldehyde. Such tackifiers may be used alone or in combination of two or more kinds as appropriate. Among them, examples of preferred tackifiers include rosin-based resins, rosin derivative resins, aliphatic (C5) petroleum resins, and terpene resins. These tackifier resins can be suitably used, for example, in the form of a rubber-based PSA layer, acrylic PSA layer, or the like.

The amount of the above tackifier used (when two or more kinds thereof are used, the total amount thereof) is normally appropriately about 20 to 150 parts by weight (preferably about 30 to 100 parts by weight) with respect to 100 parts by weight of the base polymer.
From the viewpoint of improving the high-speed peel strength, in some embodiments, the amount of tackifier used may be, for instance, 30 parts by weight or more, 40 parts by weight or more, or even 45 parts by weight or more with respect to 100 parts by weight of the base polymer. From the viewpoint of avoiding the occurrence of adhesive residues due to reduced cohesion or the like, in some embodiments, the amount of tackifier used may be, for instance, 85 parts by weight or less, or 75 parts by weight or less with respect to 100 parts by weight of the base polymer. In some embodiments, the amount of tackifier used may be, for instance, 70 parts by weight or less, 65 parts by weight or less, 55 parts by weight or less, or even 50 parts by weight or less with respect to 100 parts by weight of the base polymer. Decreasing the amount of tackifier used can be advantageous in terms of reducing workload when peeling off the PSA sheet from the adherend or preventing the PSA sheet from tearing.

The PSA layer can contain a cross-linking agent. The use of the cross-linking agent can impart appropriate cohesion to the PSA layer. The PSA layer containing the cross-linking agent can be obtained, for example, by forming a PSA layer using a PSA composition containing the cross-linking agent. The above cross-inking agent can be contained in the PSA layer in the cross-linked form, the pre-cross-linking form, the partially cross-linked form, the intermediate or combined form of these, or the like. The above cross-linking agent is typically contained in the PSA layer exclusively in the cross-linked form.

The amount of cross-linking agent, when used, can range from 0.005 to 10 parts by weight, for instance, with respect to 100 parts by weight of the base polymer. The amount of cross-linking agent used can be, for instance, 0.01 parts by weight or more, and may be 0.1 parts by weight or more, or 0.5 parts by weight or more with respect to 100 parts by weight of the base polymer. From the viewpoint of improving the tight adhesiveness to the surface of the adherend (object to be processed), the amount of cross-linking agent used can be, for example, less than 5.0 parts by weight, and it may be less than 4.0 parts by weight, 3.5 parts by weight or less, or even 2.5 parts by weight or less with respect to 100 parts by weight of the base polymer. The art disclosed herein can be suitably used even in embodiments where the amount of cross-linking agent used is less than 2.0 parts by weight, or 1.5 parts by weight or less with respect to 100 parts by weight of the base polymer.

Examples of the usable cross-linking agents include isocyanate-based cross-linking agents, epoxy-based cross-linking agents, silicone-based cross-linking agents, oxazoline-based cross-linking agents, aziridine-based cross-linking agents, silane-based cross-linking agents, alkyl etherified melamine-based cross-linking agents, metal chelate-based cross-linking agents, peroxides, and the like. Suitable examples of the above cross-inking agent include isocyanate-based cross-linking agents and epoxy-based cross-linking agents. The cross-linking agents can be used alone or in combination of two or more kinds. In some embodiments, isocyanate-based cross-linking agents can be preferably used. The isocyanate-based cross-linking agents can be used alone or in combination of two or more kinds. The isocyanate-based cross-linking agent may be used in combination with other cross-linking agents, for example, an epoxy-based cross-linking agent.

A compound having two or more isocyanate groups (including isocyanate regenerated functional groups obtaining by temporarily protecting isocyanate group using a blocking agent or through oligomerization, etc.) in one molecule can be used as the isocyanate-based cross-linking agent. Examples of the isocyanate-based cross-linking agent include aromatic isocyanates such as tolylene diisocyanate and xylene diisocyanate; alicyclic isocyanates such as isophorone diisocyanate; aliphatic isocyanates such as hexamethylene diisocyanate; and the like.

The above isocyanate-based cross-linking agent include, more specifically, lower aliphatic polyisocyanates such as butylene diisocyanate and hexamethylene diisocyanate; alicyclic isocyanates such as cyclopentylenediisocyanate, cyclohexylenediisocyanate, and isophorone diisocyanate; aromatic diisocyanates such as 2,4-tolylene diisocyanate, 4,4'-diphenylmethane diisocyanate, xylylene diisocyanate, and polymethylene polyphenyl isocyanate; isocyanate adducts such as trimethylolpropane/trimethylenediisocyanate trimer adduct (trade name CORONATE L, available from Tosoh Corporation), trimethylolpropane/hexamethylene diisocyanate trimer adduct (trade name: CORONATE HL, available from Tosoh Corporation), and isocyanurate form of hexamethylene diisocyanate (trade name: CORONATE HX, available from Tosoh Corporation); trimethylolpropane adducts such as trimethylolpropane adduct of xylenediisocyanate (trade name: TAKENATE D-110N, available from Mitsui Chemicals, Inc.), trimethylolpropane adduct of xylenediisocyanate (trade name: TAKENATE D-120N, available from Mitsui Chemicals, Inc.), and trimethylolpropane adduct of isophorone diisocyanate (trade name: TAKENATE D-140N, available from Mitsui Chemicals, Inc.), and trimethylolpropane adduct of hexamethylene diisocyanate (trade name: TAKENATE D-160N, available from Mitsui Chemicals, Inc.); polyether polyisocyanates, polyester polyisocyanates, and adducts thereof with various polyols; polyisocyanates multifunctionalized with isocyanurate bonds, burette bonds, allophanate bonds, etc.; and the like. Among these, aromatic isocyanates and alicyclic isocyanates are preferably used.

The amount of isocyanate-based cross-linking agent used can be, for instance, about 0.1 parts by weight or more, and may be about 0.5 parts by weight or more, about 1.0 parts by weight or more, or more than 1.5 parts by weight with respect to 100 parts by weight of the base polymer. From the viewpoint of much higher usefulness, in the PSA layer of some preferred embodiments, the amount of isocyanate-based cross-linking agent used may be, for instance, more than 2.0 parts by weight, about 2.5 parts by weight or more, more than 2.5 parts by weight, or about 2.7 parts by weight or more with respect to 100 parts by weight of the base polymer. The amount of isocyanate-based cross-linking agent used may be, for instance, 10 parts by weight or less, 7 parts by weight or less, or even 5 parts by weight or less with respect to 100 parts by weight of the base polymer.

Multifunctional epoxy compounds having two or more epoxy groups in one molecule can be used as the above epoxy-based cross-linking agent. Examples of the epoxy-based cross-linking agents include N,N,N',N'-tetraglycidyl-m-xylenediamine, diglycidylaniline, 1,3-bis(N,N diglycidyl aminomethyl)cyclohexane, 1,6-hexanediol diglycidyl ether, neopentyl glycol diglycidyl ether, and ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl)isocyanurate, resorcinol diglycidyl ether, and bisphenol-S-diglycidyl ether, as well as epoxy resins having two or more epoxy groups in a molecule. Commercially available products of the above epoxy-based cross-linking agents include, for example, the trade names "TETRAD-C" and "TETRAD-X" available from Mitsubishi Gas Chemical Company, Inc.

The epoxy-based cross-linking agents can be used alone or in combination of two or more kinds. The epoxy-based cross-linking agent may be used alone or in combination with other cross-linking agents, for example, an isocyanate-based cross-linking agent. The amount of epoxy-based cross-linking agent used can be, for instance, about 0.005 to 5 parts by weight, and may be about 0.01 to 5 parts by weight or even 0.1 to 3 parts by weight with respect to 100 parts by weight of the base polymer.

In addition, the PSA layer may contain various other additives that are common in the field of adhesives, such as cross-linking aids, plasticizers, softeners, fillers, antistatic agents, anti-aging agents, UV absorbers, antioxidants, and light stabilizers, as needed. As such additives, conventionally known additives can be used in the usual way, and since these additives do not particularly characterize the present invention, a detailed description thereof is omitted.

The method of providing such a PSA layer on the first face of the substrate is not particularly limited. Examples of such a method includes known method, such as a method of forming a PSA layer directly on a substrate by applying a PSA composition containing a PSA layer forming component in an appropriate medium (e.g., a solution in which a PSA layer forming component is dissolved in an organic solvent or a dispersion in which this component is dispersed in an aqueous solvent) to the substrate and then drying or curing it; a method of transferring a PSA layer formed on a releasable surface to a substrate; a method of stacking a PSA layer forming component by heating and melting this component together with a substrate forming component and performing co-extrusion molding of them; and the like. In order to form a PSA layer included in the PSA sheet with higher high-speed peel strength, the method of applying a PSA composition can be preferably employed from the viewpoint of the ease of handling the PSA sheet forming component. The above PSA composition can be prepared, for example, by mixing a polymer component, typically a tackifier, other components used as needed, and the above medium in the usual way. Various conventionally known methods can be used as the method of applying the PSA composition. Specifically, examples of the application form include extrusion coat using a roll coat, kiss roll coat, gravure coat, reverse coat, roll brush, spray coat, dip roll coat, bar coat, knife coat, air knife coat, curtain coat, lip coat, die coater, and the like.

The thickness of the PSA layer can be suitably set so as to obtain an appropriate adhesive properties depending on the application of the PSA sheet. The thickness of the PSA layer is usually appropriately 0.5 $\mu$m to 50 $\mu$m. From the viewpoint of improving the tightness of adhesion to the adherend, in some embodiments, the thickness of the PSA layer can be, for instance, 1.5 $\mu$m or greater, and may be 3 $\mu$m or greater, 5 $\mu$m or greater, or even 7 $\mu$m or greater. The thickness of the PSA layer may be, for instance, 30 $\mu$m or less, 20 $\mu$m or less, 15 $\mu$m or less, or even 10 $\mu$m or less. The thickness of the PSA layer being small can be advantageous in terms of rapidity and precision of the laser machining, for example, in the PSA sheet which can be used and subjected to laser cutting together with the adherend (workpiece). The art disclosed herein can be suitably implemented even in the form of the PSA sheet that includes the PSA layer having a thickness of less than 10 $\mu$m or 8 $\mu$m or less.

<Roll Body>

As described in this specification, the roll body obtained by winding the PSA sheet disclosed herein can be provided. Such a roll body typically includes a core (winding core) and a PSA sheet wound around the core. The shape of the core is not particularly limited and can be, for example, a solid cylinder, a hollow cylinder (i.e., cylindrical), a hollow or solid polygonal cylinder, etc. From the viewpoint of improving the handling of the roll body, a hollow cylindrical or hollow polygonal cylindrical core can be preferably employed. A cylindrical core is particularly preferred.

The material forming the core is not particularly limited, and any known material can be used. Examples of the material include paper products such as cardboard; plastic materials such as PE resin, PP resin, polyvinyl chloride resin, polyester, epoxy resin, phenol resin, melamine resin, silicon resin, polyurethane, polycarbonate, and acrylonitrile-butadiene-styrene copolymer resin (ABS resin); composite materials such as fiber-reinforced plastics (FRP); metal materials such as iron, stainless steel (SUS), and aluminum; and the like.

The outer diameter of the core is not particularly limited. In some embodiments, the outer diameter of the core may be, for instance, 30 mm or more, 50 mm or more, 70 mm or more, 80 mm or more, or even 85 mm or more. There is a demand to reduce the frequency of replacement of the roll by lengthening the stacked sheets included in the roll body for the purpose of improving productivity and the like. In order to lengthen the stacked sheets included in the roll body, it is advantageous to set the outer diameter of the core smaller. From this perspective, the outer diameter of the core is, for instance, preferably 300 mm or less, and may be 250 mm or less, 200 mm or less, or 180 mm or less. The art disclosed herein can be suitably implemented even in the form of the roll body in which the outer diameter of the core is 150 mm or less, 100 mm or less, or further 95 mm or less. It is noted that in the case of a winding core with a non-circular cross-sectional shape, the diameter of the above core means the diameter of the core which is obtained by approximating its cross-sectional shape as a circle.

In the case of a hollow-shaped core, the wall thickness (i.e., the thickness of the outer wall) of the core is not particularly limited and can be set appropriately to obtain the desired strength in consideration of the material and outer diameter of the core and the like. From the viewpoint of reducing the weight of the roll body and the like, the wall thickness of the core is normally appropriately about 2 mm to 15 mm, and it is preferably about 3 mm to 10 mm.

The width of the PSA sheet forming the roll body disclosed herein is typically 5 mm or greater, and can be, for instance, 10 mm or greater. It is preferably 20 mm or greater, and more preferably 30 mm or greater. It may be 50 mm or greater, 150 mm or greater, 300 mm or greater, or 500 mm or greater. As the width of the PSA sheet increases, peeling noise generated when rewinding the roll body of the PSA sheet tends to become generally louder. Therefore, it is particularly meaningful to apply the art disclosed herein in order to suppress the generation of peeling noise. From the viewpoint of the handling and the like, the width of the above PSA sheet is usually appropriately about 5 m or less, for instance, about 4 m or less, about 3 m or less, about 2 m or less, or even about 1 m or less.

In the PSA sheet forming the roll body disclosed herein, from the viewpoint of decreasing the fluctuation range of the self-backside adhesive strengths, the high-speed unwinding force measured at a speed of 30 m/min is, for instance, preferably 5 N/20mm or lower, and more preferably 4.5 N/20mm or lower, and it may be 4 N/20mm or lower. The high-speed unwinding force being small can be advantageous from the viewpoint of reducing the labor required for unwinding the PSA sheet to improve workability, and from the viewpoint of preventing the PSA sheet stretched when it is unwound from shrinking after being applied to the adherend and from floating from the adherend. The lower limit of the high-speed unwinding force is not particularly limited, but from the viewpoint of facilitating the balance with other properties, it is, for instance, preferably 0.5 N/20mm or higher, and more preferably 1 N/20mm or higher, and may be 1.5 N/20mm or higher. It is preferable that the high-speed unwinding force is not too small from the viewpoint of avoiding inconveniences such as the tendency of the sheet to be rolled out excessively from the roll form. The high-speed unwinding force can be measured based on JIS Z0237:2009. The high-speed unwinding force can be adjusted, for example, by the selection of the type of the PSA in the PSA layer, the kind and amount of cross-linking agent used, and the kind and processing method of release agent, as well as by the use of optional components such as tackifier resin, and the like.

<Applications>

The PSA sheet disclosed herein can be suitably used as, for example, a surface protection material (which can also be understood as the PSA sheet for surface protection) because it takes advantages of the features, such as a high level of high-speed peel strength, suppression of peeling noise when the surface of the PSA layer is exposed prior to application to the adherend, and not overly slippery properties even when the PSA sheets are stacked while being applied to a metal plate or the like. The PSA sheet disclosed herein may be used, for example, to protect the surface of members by being applied to their surfaces when transporting, processing or curing them; examples of the members include metal plates, painted plates, aluminum sashes, resin plates, decorative steel plates, polyvinyl chloride laminated steel plates, members such as glass plates, optical films for liquid crystal such as polarizing films, optical members such as liquid crystal panels, electronic members, etc.

The PSA sheet disclosed herein can be preferably used in the form of surface protection in a state where it is applied to a workpiece to be processed by various types of lasers, followed by laser cutting as the workpiece is subjected to laser machining. The laser beam used in the above laser machining is not particularly limited, and various conventionally known laser beams can be employed. Examples of the usable laser beams include excimer lasers such as an ArF excimer laser, a KrF excimer laser, and a XeCl excimer laser, solid-state lasers such as a YAG laser and a YLF laser, a YVO4 laser, and a titanium sapphire laser, semiconductor lasers (sometimes also referred to as diode lasers), fiber lasers, carbon dioxide gas lasers, and the like. The type of laser machining to be performed on a workpiece in the state where the PSA sheet disclosed herein is applied is not particularly limited, but examples thereof can include cutting, drilling, machining, engraving, etc.

The material of the workpiece is not particularly limited as long as it can be cut with the laser beam (e.g., laser beams from a carbon dioxide gas laser or fiber laser). Examples of the material include metal and metalloid materials such as iron, iron alloys (carbon steel, stainless steel, chromium steel, nickel steel, etc.), aluminum, aluminum alloys, nickel, tungsten, copper, copper alloys, titanium, titanium alloys and silicon; resin materials such as polyolefin resins, polycarbonate resins and acrylic resins; ceramic materials such as alumina, silica, sapphire, silicon nitride, tantalum nitride, titanium carbide, silicon carbide, gallium nitride and plaster; glass materials such as aluminosilicate glass, soda lime glass, soda aluminosilicate glass and quartz glass; cellulose-based materials such as paper, cardboard, wood materials and plywood; laminates and composites of these; and the like. Favorable examples of the workpiece include metal materials such as iron, aluminum, copper, titanium and alloys (stainless steel, etc.) containing the respective metals as primary components. The shape of the workpiece is not particularly limited and can be planar, cylindrical, in a rough mass, etc. The PSA sheet disclosed herein is preferable because it is prevented from slipping laterally even when the PSA sheets are stacked while each sheet is applied to the metal plate as the workpiece.

In such laser machining, the PSA sheet disclosed herein can be preferably used in a state of being applied to the laser-irradiated side surface of a workpiece. For the purposes such as surface protection of the workpiece before and after or during the laser machining, the above PSA sheet can be applied to the surface on the side (backside) opposite to the laser-irradiated side of the workpiece. The PSA sheet disclosed herein can be preferably used for laser machining using a short-wavelength laser with a center wavelength of 900 to 1100 nm among such laser machining. As the short-wavelength laser, for example, a fiber laser having a center wavelength of about 1050 nm or a diode laser having a center wavelength of about 950 nm can be used.

The matters disclosed in this specification include the following:

(1) A PSA sheet comprising a resin film as a substrate and a PSA layer provided on a first face of the substrate, wherein

a second face of the substrate is a release face,
the second face has a slip resistance value of 3.5 N or more, and
the PSA sheet has:

a high-speed peel strength of 4.5 N/20mm or higher, which is measured under conditions of a tensile speed of 30 m/min after 30 minutes of application to a stainless steel plate; and
a difference between the maximum and minimum values of a self-backside adhesive strength of 1.5 N/20mm or lower, which is measured under a condition of a tensile speed of 30 m/min.

(2) The PSA sheet according to (1) above, wherein the second face of the substrate is formed of a resin composition containing a release agent.
(3) The PSA sheet according to (2) above, wherein the release agent contains a silicone-based release agent.
(4) The PSA sheet according to (3) above, wherein the silicone-based release agent contains a silylated polyolefin.
(5) The PSA sheet according to any one of (2) to (4) above, wherein the substrate is formed integrally with the resin composition containing the release agent through co-extrusion molding.
(6) The PSA sheet according to any one of (1) to (5) above, wherein a PSA forming the PSA layer is a natural rubber-based PSA.
(7) The PSA sheet according to any one of (1) to (6) above, wherein an average value of the self-backside adhesive strengths is 1 N/20mm or higher and 5 N/20mm or lower.
(8) The PSA sheet according to any one of (1) to (7) above, wherein the PSA sheet has a low-speed peel strength of 5 N/20mm or lower, which is measured under conditions of a tensile speed of 0.3 m/min after 30 minutes of application to a stainless steel plate.
(9) The PSA sheet according to any one of (1) to (8) above, wherein the substrate is a polyolefin resin film or polyester resin film.
(10) The PSA sheet according to any one of (1) to (9) above, wherein the substrate includes a backside layer formed of a resin composition containing a release agent and a support layer disposed on an inner side of the backside layer.
(11) The PSA sheet according to (10) above, wherein the support layer is a polyolefin resin layer or polyester resin layer.
(12) A PSA sheet comprising a resin film as a substrate and a PSA layer provided on a first face of the substrate, wherein

a second face of the substrate is a release face formed of a resin composition containing a release agent,
the substrate includes a backside layer formed of a resin composition containing the release agent and a support layer disposed on an inner side of the backside layer,
the release agent contains a silylated polyolefin,
the support layer is a polyolefin resin layer or polyester resin layer, and
a PSA forming the PSA layer is a natural rubber-based PSA.

(13) The PSA sheet according to (12) above, wherein the substrate is formed integrally with the resin composition containing the release agent through co-extrusion molding.
(14) The PSA sheet according to (12) or (13) above, wherein the substrate includes a backside layer formed of a resin composition containing the release agent and a support layer disposed on an inner side of the backside layer.
(15) The PSA sheet according to any one of (12) to (14) above, wherein the PSA sheet has a high-speed peel strength of 4.5 N/20mm or higher, which is measured under conditions of a tensile speed of 30 m/min after 30 minutes of application to a stainless steel plate.
(16) The PSA sheet according to any one of (12) to (15) above, wherein the PSA sheet has a difference between the maximum and minimum values of a self-backside adhesive strength of 1.5 N/20mm or lower, which is measured under a condition of a tensile speed of 30 m/min.
(17) The PSA sheet according to any one of (12) to (16) above, wherein the second face has a slip resistance value of 3.5 N or more.
(18) A PSA sheet that is formed of the PSA sheet according to any one of (1) to (17) above, used as a surface protection material.

(19) The PSA sheet according to any one of (1) to (18) above, wherein the PSA sheet is used in an application involving cutting with a laser beam.

(20) The PSA sheet according to any one of (1) to (19) above, wherein the substrate contains a laser beam absorbent.

(21) The PSA sheet according to (20) above, wherein the laser beam absorbent contains at least one selected from the group consisting of carbon black, titanium oxides, iron-based oxides, titanium black and manganese-based oxides.

(22) The PSA sheet according to any one of (1) to (21) above, wherein the PSA sheet is used in an application involving cutting with a laser beam having a center wavelength of 900 nm to 1100 nm.

(23) The PSA sheet according to any one of (1) to (22) above, wherein the PSA layer contains a tackifier.

(24) The PSA sheet according to (23) above, wherein the tackifier contains at least one selected from the group consisting of rosin-based resins, rosin derivative resins, aliphatic (C5) petroleum resins, and terpene resins.

(25) The PSA sheet according to (23) or (24) above, wherein the PSA layer contains the tackifier in an amount of less than 70 parts by weight with respect to 100 parts by weight of a base polymer.

(26) The PSA sheet according to any one of (1) to (25) above, wherein the PSA layer has a thickness of less than 10 $\mu$m.

(27) A method of manufacturing a product subjected to laser machining, the method comprising the steps of

preparing an object to be processed, to which the PSA sheet according to any one of (1) to (26) above is applied; and

performing laser machining on the object by irradiating the object to which the PSA sheet is applied with a laser beam having a center wavelength of 900 nm to 1100 nm, and also cutting the PSA sheet from the object using the laser beam.

(28) The method according to (27) above, wherein the object to be irradiated with the laser beam has the PSA sheet applied on at least one of a face of the object on a side irradiated with the laser beam and an opposite face of the object.

(29) The method according to (27) or (28) above, further comprising the steps of, in this order: post-processing of the object obtained after the laser machining; and removing the PSA sheet by pulling and peeling off the PSA sheet from the object.

(30) The method according to any one of (27) to (29) above, wherein the object is a metal plate.

(31) A roll body having a configuration in which the PSA sheet according to any one of (1) to (26) above is wound such that the PSA layer contacts the second face of the substrate.

(32) The roll body according to (31) above, wherein the roll body has a high-speed unwinding force of 1 N/20mm or higher and 5 N/20mm or lower.

[Examples]

Several worked examples relating to the present invention are described below, but the present invention is not intended to be limited to these examples. In the description below, "parts" and "%" are based on the weight unless otherwise specified. Furthermore, the amount of each material used is based on the amount of an active component unless otherwise specified.

In the respective Examples below, the following raw materials were used for preparation of PSA sheets.

PSA composition P1: a mixture of 100 parts of natural rubber, 45 parts of a tackifier (trade name: "QUINTONE A100" available from Zeon Corporation), 2 parts of an anti-aging agent (trade name: "NOCLAC NS-5" available from OUCHI SHINKO CHEMICAL INDUSTRIAL CO.,LTD.), 3 parts of an isocyanate-based cross-linking agent (trade name: "CORONATE L" available from Tosoh Corporation), and toluene.

PSA composition P2: a mixture of 100 parts of natural rubber, 70 parts of a tackifier (trade name: "QUINTONE A100" available from Zeon Corporation), 2 parts of an anti-aging agent (trade name: "NOCLAC NS-5" available from OUCHI SHINKO CHEMICAL INDUSTRIAL CO.,LTD.), 3 parts of an isocyanate-based cross-linking agent (trade name: "CORONATE L" available from Tosoh Corporation), and toluene.

<Preparation of PSA sheets>

(Example 1)

A support layer forming material was prepared by mixing 3 parts of a black masterbatch (or $Fe_3O_4$ masterbatch, hereinafter) containing $Fe_3O_4$ (triiron tetroxide powder with a mean particle diameter of 250 nm) at a concentration of 40% in a polyolefin and 97 parts of LDPE (low-density polyethylene, trade name: "PETROSEN 186R" available from Tosoh Corporation). Meanwhile, a backside layer forming material (a silicone-based release agent content was 1.2% in the backside layer forming material) was prepared to be composed of a silylated polyolefin masterbatch which contained about 30% of silylated polyolefin as a silicone-based release agent (prepared by a method shown in an example of Japanese Patent Application Publication No. 2011-26448) and about 70% of PE resin. Then, 96 parts of the support layer forming material and the backside layer forming material consisting of 4 parts of the silylated polyolefin masterbatch were subjected to co-extrusion by an inflation molding at a die temperature of 180 °C to form a resin film F1 having a two-layer structure composed of a support layer and a backside layer. The total thickness of the resin film F1 was 80 $\mu$m, of which the backside layer was 8 $\mu$m thick. Corona discharge treatment was applied to the first face of the resin film F1 (the side which was not the release face side), and then a PSA composition PI was applied to the corona discharge treated face and dried to form a PSA layer having a thickness of 5 $\mu$m. In this way, a PSA sheet having a PSA layer on the first face of a substrate and having a release face on the second face of the substrate was obtained.

(Examples 2 to 5)

Resin films F2 to F5 were obtained in the same manner as the resin film F1 except that the content of the silylated polyolefin masterbatch in the backside layer forming material was changed as shown in Table 1. PSA sheets of Examples 2 to 5 were obtained in the same manner as in Example 1 except for the use of respective resin films F2 to F5 instead of the resin film F1.

(Example 6)

A PSA sheet according to the present example was obtained in the same manner as in Example 1 except that a PSA composition P2 was used instead of the PSA composition PI with the thickness of the PSA layer set to 10 $\mu$m.

(Examples 7 and 8)

PSA sheets of Examples 7 and 8 were obtained in the same manner as in Example 6 except for the use of respective resin films F2 and F3 instead of the resin film F1.

(Comparative Example 1)

Corona discharge treatment was applied to the first face of the resin film F2 obtained in the same manner as in Example 2, and then a styrene-ethylene/butylene-styrene block copolymer (SEBS) was applied as abase polymer to the corona discharge treated face to form a rubber-based PSA layer having a thickness of 10 $\mu$m, thus obtaining a PSA sheet of this Comparative Example.

(Comparative Example 2)

Corona discharge treatment was applied to the first face of the resin film F2 (the face which was not on the release face side) obtained in the same manner as in Example 2, and then the following acrylic PSA composition was applied to the corona discharge treated face and dried to form an acrylic PSA layer having a thickness of 10 $\mu$m, thus obtaining a PSA sheet of this Comparative Example.
Acrylic PSA composition: A mixture obtained in the following way. Ethyl acetate as a polymerization solvent, 96 parts of 2-ethylhexyl acrylate (2EHA) and 4 parts of acrylic acid (AA) both serving as monomer raw materials, and 0.2 parts of AIBN as a polymerization initiator were mixed and polymerized under a nitrogen stream. To the resulting ethyl acetate solution of the acrylic polymer (concentration of 40%, Mw of acrylic polymer = $50 \times 10^4$), 1 part of an isocyanate-based cross-linking agent (trade name: "CORONATE L" available from Tosoh Corporation) was added and mixed with respect to 100 parts of the non-volatile content in the solution.

(Comparative Example 3)

The substrate layer forming material obtained in the same manner as in Example 1 was used to form a resin film F6 by the inflation molding at a die temperature of 180 °C so that the resin film F6 had a single layer structure of 90 $\mu$m in the thickness. Corona discharge treatment was applied to one face (the first face) of the resin film F6, and the PSA composition PI was then applied to the corona discharge treated face and dried to form a PSA layer having a thickness of 5 $\mu$m. A UV-curable solvent-free silicone-based release agent was applied to the other face (the second face) of the resin film F6. The amount of the above release agent used was set to 1.3 g/m$^2$. After the application of the above release agent, a high-pressure mercury vapor lamp was used as the light source to irradiate the film F6 with UV light under the conditions of 2 W/cm$^2$ illumination and a line speed of 70 m/min, thereby curing the above release agent to form a backside treatment layer. In this way, a PSA sheet of this Comparative Example was obtained.

(Comparative Example 4)

The resin film F6 was obtained in the same manner as in Comparative Example 3. Corona discharge treatment was applied to one face (the first face) of the resin film F6, and then the PSA composition P2 was applied to the corona discharge treated face and dried to form a PSA layer having a thickness of 10 μm. A reaction product of polyvinyl alcohol and octadecyl isocyanate both serving as alkyl-based release agents was applied onto the other face (the second face) of the resin film F6 so that it had a thickness of 0.05 μm after drying, thereby forming a backside treatment layer. In this way, a PSA sheet of this Comparative Example was obtained.

Note that the PSA sheet according to each of Examples and Comparative Examples had a transmittance of the prescribed laser beam within 20 to 40% at a wavelength where the laser beam absorbance became minimum within a range of wavelengths of 900 nm to 1100 nm. In the PSA sheet of each Example, a reflectance of the prescribed laser beam at a wavelength where the laser beam absorbance became minimum was within 3 to 10%. The minimum laser beam absorbance within the range of wavelengths from 900 nm to 1100 nm was within 60 to 70%. The lightness L* of the backside of the PSA sheet of each Example was within a range of 20 to 35, the chromatic coordinate a* of the backside of the PSA sheet thereof was within a range of 0 to +1, and the chromatic coordinate b* of the backside of the PSA sheet thereof was within a range of 0 to +1.

<Performance Evaluation>

Samples in a suitable size were cut out from the PSA sheets prepared above and subjected to the following evaluations. The results are shown in Table 1.

(1) High-speed peel strength

The PSA sheet according to each Example was cut into strips of 20 mm in width and 100 mm in length to produce test specimens. The adhesive face of this test specimen was press-fitted to a stainless steel plate (SUS430BA) as the adherend by giving one reciprocating movement of a rubber roller of 2 kg specified by JIS Z0237. The sample was left in a standard environment with 23°C × 50%RH for 30 minutes. Then, the high-speed peel strength (N/20mm) of the sample was measured in this standard environment under the conditions of a tensile speed of 30 m/min and a peeling angle of 180 degrees by using a universal tensile tester.

(2) Low-speed peel strength

The PSA sheet according to each Example was cut into strips of 20 mm in width and 100 mm in length to produce test specimens. The adhesive face of this test specimen was press-fitted to a stainless steel plate (SUS430BA) as the adherend by giving one reciprocating movement of a rubber roller of 2 kg specified by JIS Z0237. The sample was left in a standard environment with 23°C × 50%RH for 30 minutes. Then, the low-speed peel strength (N/20mm) of the sample was measured in this standard environment under the conditions of a tensile speed of 0.3 m/min and a peeling angle of 180 degrees by using the universal tensile tester.

(3) Self-backside adhesive strength

A long resin film of 1000 mm in width was used as the substrate in each Example, and a PSA composition according to each Example was applied in a width of about 930 mm onto the center of the substrate in the width direction and dried to produce a long PSA sheet. The PSA sheet was cut at their both widthwise ends inside the width of the PSA layer (with a thickness specified in each Example) formed of the above PSA composition to produce a roll-body preparation sample of about 300 mm in width and about 1000 m in length.

A cylindrical core having an outer diameter of 90.2 mm and a shaft length of 305 mm was prepared. One end of the above roll-body preparation sample in the longitudinal direction (the beginning end for winding) was fixed to the outer circumferential surface of the above core by a commercially available adhesive tape such that the PSA layer side of the above sample faces the inner circumferential side. The remaining part of the sample was wound around the core with a winding tension of about 200 N/m to produce a roll body.

After the roll prepared above was left in a room at 30°C for 28 days, about 50 cm of the PSA sheet was rolled out and removed from the winding end. Then, two slits extending along the axial direction of the roll were made in the outer circumference of the remaining roll body at an interval of 20 mm. While about three PSA sheets (i.e., about three laps thereof) located between these slits were being stacked, these PSA sheets were peeled off from the backside of the PSA sheet on the inner side, thereby producing a PSA sheet laminate (a sample for a self-backside peel test) of 20 mm in width and 300 mm in length.

A SUS304 plate (BA finish) was affixed to the adhesive face of the above PSA sheet laminate which was exposed toward the inner circumferential side and then lined. After the laminate was left in a standard environment with 23°C × 50%RH for 30 minutes, the self-backside peel test was performed on the PSA sheet laminate in the standard environment by pulling and peeling one PSA sheet on the outer circumferential side of the laminate from the outer circumferential side, i.e., the backside of the second PSA sheet through the use of a universal tensile tester under conditions of a tensile speed of 30 m/min and a peeling angle of 180 degrees. At this time, data on the adhesive strength was acquired every 0.25 mm of peeling distance. Of these, the adhesive strength data acquired about the peeling distance range of 20 mm to 70 mm, specifically, the difference between the maximum and minimum values of the self-backside adhesive strength and the average value of self-backside adhesive strengths, were determined, respectively. The obtained results are shown in the "fluctuation range of self-backside adhesive strengths" column and the "average value of self-backside adhesive strengths" column in Table 1.

(4) Machinability

A SUS304 plate (2B finish) with a thickness of 3.0 mm was used as the workpiece, and the PSW sheet according to each Example was applied to the top surface of the workpiece. A cutting test was conducted by irradiating the workpiece with a laser beam from its top side. Specifically, a fiber laser cutting machine (trade name: "TRULASER 5030" available from Trumpf, center wavelength of 1050 nm) was used to cut straight lines under the following conditions.

[Laser machining conditions]

Cutting speed: 5.0 m/min
Output: 3000 W
Supplied gas and gas pressure: nitrogen gas at a pressure of 18 bar
Diameter of nozzle: 2.0 mm
Height of nozzle: 2 mm
Focus of laser beam: 1.5 mm deep from the top surface of the workpiece

Then, the machined edge of the workpiece (laser-cut edge, here) was inspected visually. Under the above conditions, when the cut was successfully done with no floating or peeling of the PSA sheet, the machinability was graded "G" (good); when floating or peeling of the PSA sheet was observed even though the cut was successfully done, the machinability was graded "NG" (poor).

(5) Noisiness

A roll body in which long PSA sheets having a width of 200 mm in each Example were wound was obtained in the same manner as the production of the above-described roll body for obtaining the self-backside peel strength except that the cut width of the PSA sheet was set to 200 mm. The noise volume when the PSA sheet was rolled out from the roll body at a tensile speed of about 30 m/min and a peeling angle of about 90° was measured with a sound level meter (trade name: "SOUND LEVEL METER NL-27" available from RION CO., LTD.) installed at a distance of about 10 cm horizontally from the roll body being rolled out. When the noise volume was less than 100 dB, the noisiness was graded "G" (good); when the noise volume was greater than or equal to 100 dB, the noisiness was graded "NG" (poor). It should be noted that noise levels of 100 dB or greater are generally known to be levels that cause abnormal hearing functions.

(6) Slip resistance value

The PSA sheet according to each Example was applied to the top surface of an SUS304 plate (2B finish) with a thickness of 3.0 mm, a length of 300 mm and a width of 200 mm not to trap bubbles in to produce a sample plate. The application of the PSA sheet was performed such that the longitudinal direction (MD) of the resin film used as the substrate was parallel to the length direction of the sample plate.

A load was placed on a square sliding piece having a contact area of 25 cm2 (one side length of 50 mm) and made of an SUS304 plate (BA finish), so that the total load including the weight of the sliding piece was set to 1.0 kg. The above sliding piece was placed on the sample plate (i.e., on the backside of the PSA sheet). Then, under the standard environment with 23°C × 50%RH, the dynamic friction force (N) generated when sliding this sliding piece on the sample plate along its length direction at a tensile speed of 300 mm/min was measured with an autograph (trade name: "AG-ISD" available from Shimadzu Corporation). An average slip resistance value determined from slip resistance value data acquired within a slip distance range of 100 mm to 200 mm is shown in the "slip resistance value" column of Table 1.

(7) Slipperiness

Plural sample plates, each having the PSA sheet according to each Example applied on the top surface of an SUS304 plate (2B finish) with a thickness of 3.0 mm, a length of 300 mm, and a width of 200 mm, were produced. Ten of the sample plates were placed horizontally on top of each other such that the top surface (PSA sheet-applied surface) of one sample plate and the backside (SUS plate surface) of the other sample plate alternately contacted each other. The topmost sample plate was gently pushed by hand in the horizontal direction, which was observed visually. When the sample plate was pushed with no horizontal slip of the stacked sample plates observed, the slipperiness was graded "G" (good); when the sample plate was pushed and the stacked plate slipped horizontally without any resistance, which was then observed, the slipperiness was graded "NG" (poor).

(8) Adhesive residue (adhesive residue test after bending)

The surface of an SUS304 plate (2B finish) of 0.6 mm in thickness as the adherend was wiped with a toluene-soaked waste cloth. The PSA sheet according to each Example was applied to the SUS304 plate using a laminator (at a linear pressure of 40 N/cm and a speed of 3 m/min) and left at room temperature for 30 minutes or more.
Thereafter, the PSA sheet with the SUS304 plate was bent at an angle of 90° such that the PSA sheet side was shaped to be convex. The PSA sheet was then peeled off under conditions of a tensile speed of about 0.3 m/min and a peeling angle of about 180 degrees, and the surface condition of the adherend was visually observed. When no adhesive residue was observed on the surface of the adherend, the adhesive residue was graded "G" (good); when some adhesive residue was observed, the adhesive residue was graded "NG" (poor).

[Table 1]

Table 1

| | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 |
|---|---|---|---|---|---|---|---|---|---|---|---|---|---|---|
| PSA tape configuration | PSA Composition | Substrate | P1 | P1 | P1 | P1 | P1 | P2 | P2 | P2 | SEBS-based | Acrylic | P1 | P2 |
| | | Backside treatment method | Silicone-based release agent kneaded | | | | | | | | | | Silicone-based release agent applied | Alkyl-based release agent applied |
| | | Release agent masterbatch content *1 [wt%] | 4 | 6 | 8 | 10 | 20 | 4 | 6 | 8 | 6 | 6 | - | - |
| Evaluation results | Low-speed peel strength [N/20mm] | | 2.1 | 2.2 | 1.8 | 2.1 | 1.9 | 4.0 | 4.1 | 4.5 | 2.9 | 1.2 | 2.1 | 4.4 |
| | High-speed peel strength [N/20mm] | | 8.6 | 8.6 | 7.9 | 8.1 | 8.5 | 17.3 | 16.8 | 15.9 | 2.0 | 4.2 | 8.2 | 16.1 |
| | Machinability | | G | G | G | G | G | G | G | G | NG | NG | G | G |
| | Average value of self-backside adhesive strengths [N/20mm] | | 2.7 | 2.3 | 2.2 | 2.0 | 1.9 | 3.8 | 4.0 | 3.7 | 0.3 | 0.2 | 3.6 | 3.7 |
| | Fluctuation range of self-backside adhesive strengths [N/20mm] | | 0.5 | 0.2 | 0.1 | 0.1 | 0.1 | 1.4 | 1.1 | 0.5 | 0.1 | 0.1 | 0.7 | 1.7 |
| | Noisiness | | G | G | G | G | G | G | G | G | G | G | G | NG |
| | Slip resistance value [N] | | 6.4 | 5.8 | 5.4 | 5.1 | 4.8 | 6.4 | 5.8 | 5.4 | 5.8 | 5.8 | 3.3 | 5.2 |
| | Slipperiness | | G | G | G | G | G | G | G | G | G | G | NG | G |
| | Adhesive residue | | G | G | G | G | G | G | G | G | G | G | G | G |

*1: Content of silylated polyolefin masterbatch in backside layer forming material (wt%)

24

As shown in Table 1, according to the PSA sheets of Examples 1 to 8, the workpiece was able to be cut without floating or peeling of the PSA sheet when performing fiber laser machining on the workpiece with the PSA sheet. These PSA sheets had good noisiness when being pulled and peeled off from its backside and was prevented from slipping horizontally when stacking the SUS plates with the PSA sheets. In contrast, in the PSA sheets of Comparative Examples 1 and 2 that had a high-speed peel strength of 4.5 N/20mm or higher, floating or peeling of the PSA sheet during the fiber laser machining was observed. In addition, the PSA sheet of Comparative Example 3 having a slip resistance value of less than 3.5 N was prone to slip horizontally when stacking the SUS plates to which the PSA sheets were applied. In the PSA sheet of Comparative Example 4 having a difference between the maximum and minimum values of a self-backside adhesive strength of higher than 1.5 N/20mm, noise when pulling and peeling the PSA sheet from its backside was loud, which may lead to deterioration of a work environment during use in terms of noise.

Although specific embodiments of the present invention have been described in detail above, these are illustrative only and do not limit the scope of the claims. The art according to the claims includes various modifications and changes made to the specific embodiments illustrated above.

[Reference Signs List]

| | |
|---|---|
| 1, 2 | PSA sheet |
| 10 | Resin film (substrate) |
| 10A | First face |
| 10B | Second face (backside, release face) |
| 11 | Backside layer |
| 12 | Support layer |
| 20 | PSA layer |
| 20A | Surface (adhesive face) |
| 50 | Roll body |
| 52 | Core |

**Claims**

1. A pressure-sensitive adhesive sheet comprising a resin film as a substrate and a pressure-sensitive adhesive layer provided on a first face of the substrate, wherein

   a second face of the substrate is a release face,
   the second face has a slip resistance value of 3.5 N or more, and
   the pressure-sensitive adhesive sheet has:

   a high-speed peel strength of 4.5 N/20mm or higher, which is measured under conditions of a tensile speed of 30 m/min after 30 minutes of application to a stainless steel plate; and
   a difference between maximum and minimum values of a self-backside adhesive strength of 1.5 N/20mm or lower, which is measured under a condition of a tensile speed of 30 m/min.

2. The pressure-sensitive adhesive sheet according to Claim 1, wherein the second face of the substrate is formed of a resin composition containing a release agent.

3. The pressure-sensitive adhesive sheet according to Claim 2, wherein the release agent contains a silicone-based release agent.

4. The pressure-sensitive adhesive sheet according to Claim 3, wherein the silicone-based release agent contains a silylated polyolefin.

5. The pressure-sensitive adhesive sheet according to any one of Claims 1 to 4, wherein a pressure-sensitive adhesive forming the pressure-sensitive adhesive layer is a natural rubber-based pressure-sensitive adhesive.

6. The pressure-sensitive adhesive sheet according to any one of Claims 1 to 5, wherein an average of the self-backside adhesive strengths is 1 N/20 mm or higher and 5 N/20 mm or lower.

7. The pressure-sensitive adhesive sheet according to any one of Claims 1 to 6, wherein the pressure-sensitive adhesive sheet has a low-speed peel strength of 5 N/20 mm or lower, which is measured under conditions of a tensile speed of 0.3 m/min after 30 minutes of application to a stainless steel plate.

8. The pressure-sensitive adhesive sheet according to any one of Claims 1 to 7, wherein the substrate is a polyolefin resin film or polyester resin film.

9. The pressure-sensitive adhesive sheet according to any one of Claims 1 to 8, being used in an application involving cutting with a laser beam.

10. The pressure-sensitive adhesive sheet according to any one of Claims 1 to 9, wherein the substrate contains a laser beam absorbent.

11. The pressure-sensitive adhesive sheet according to Claim 10, wherein the laser beam absorbent contains at least one selected from the group consisting of carbon black, titanium oxides, iron-based oxides, titanium black and manganese-based oxides.

12. The pressure-sensitive adhesive sheet according to any one of Claims 1 to 11, being used in an application involving cutting with a laser beam having a center wavelength of 900 nm to 1100 nm.

13. A roll body comprising the pressure-sensitive adhesive sheet according to any one of Claims 1 to 12 in a wound form such that the pressure-sensitive adhesive layer contacts the second face of the substrate.

[Fig. 1]

FIG.1

[Fig. 2]

FIG.2

[Fig. 3]

10B

2

11
12 } 10

10A

20

20A

FIG.3

## INTERNATIONAL SEARCH REPORT

| International application No. |
| --- |
| PCT/JP2021/004568 |

A. CLASSIFICATION OF SUBJECT MATTER

C09J 11/04(2006.01)i; C09J 107/00(2006.01)i; C09K 3/00(2006.01)i; C09J 7/22(2018.01)i; C09J 7/24(2018.01)i; C09J 7/25(2018.01)i; C09J 7/38(2018.01)i

FI: C09J7/22; C09J7/38; C09J107/00; C09J7/24; C09J7/25; C09K3/00 R; C09K3/00 105; C09J11/04

According to International Patent Classification (IPC) or to both national classification and IPC

B. FIELDS SEARCHED

Minimum documentation searched (classification system followed by classification symbols)
C09J11/04; C09J107/00; C09K3/00; C09J7/22; C09J7/24; C09J7/25; C09J7/38

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2008-080626 A (TORAY ADVANCED FILM CO., LTD.) 10 April 2008 (2008-04-10) claims 1-3, 5-6, 8, paragraphs [0001], [0013], [0021]-[0023], [0026]-[0039], [0042]-[0062], examples 1-4, fig. 2 | 1-4, 6-8, 13 |
| Y | | 1-13 |
| Y | JP 2017-200977 A (NITTO DENKO CORP.) 09 November 2017 (2017-11-09) examples 1-11 | 1-13 |
| Y | JP 2019-059879 A (NITTO DENKO CORP.) 18 April 2019 (2019-04-18) claims 1-8, examples 1-5, 7 | 1-13 |

☐ Further documents are listed in the continuation of Box C.    ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 April 2021 (08.04.2021) | 20 April 2021 (20.04.2021) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**
Information on patent family members

International application No.

PCT/JP2021/004568

| Patent Documents referred in the Report | Publication Date | Patent Family | Publication Date |
|---|---|---|---|
| JP 2008-080626 A | 10 Apr. 2008 | (Family: none) | |
| JP 2017-200977 A | 09 Nov. 2017 | (Family: none) | |
| JP 2019-059879 A | 18 Apr. 2019 | WO 2019/065358 A1 CN 111108165 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020020903 A
- JP 2019059879 A
- WO 2018159591 A
- JP 2011026448 A